# EUROPEAN PATENT SPECIFICATION

(11) **EP 3 566 010 B1**
(45) Date of publication and mention of the grant of the patent: **28.08.2024**
(21) Application number: 18744876.6
(22) Date of filing: 05.01.2018
(51) Int. Cl.: A01G 9/14, A01G 9/24, F24S 80/50, H02S 40/22, E04D 13/072, E04F 13/00, F24S 30/425, F24S 23/70, H02S 40/44, A01G 9/22, F24S 80/525, F24S 23/74

(54) **THIN FILM HOUSING STRUCTURES FOR COLLECTING SOLAR ENERGY, AND ASSOCIATED SYSTEMS AND METHODS**
DÜNNSCHICHTGEHÄUSESTRUKTUREN ZUM SAMMELN VON SONNENENERGIE UND ZUGEHÖRIGE SYSTEME UND VERFAHREN
STRUCTURES D'ENVELOPPE EN FILM MINCE DESTINÉES À CAPTER L'ÉNERGIE SOLAIRE, ET SYSTÈMES ET PROCÉDÉS ASSOCIÉS

(30) Priority: 25.01.2017 US 201762450524 P; 12.04.2017 US 201762484817 P
(43) Date of publication of application: 13.11.2019
(73) Proprietor: Glasspoint Solar, Inc., Fremont, CA 94538 (US)
(72) Inventor: VON BEHRENS, Peter Emery, Menlo Park, CA 94025 (US); BURVILL, Hayden Graham, San Carlos, CA 94070 (US); CHANDRA, Manish, Fremont, CA 94555 (US); OWLETT, Thomas, Mountain View, California 94040 (US); TREYNOR, Chiaki, Berkeley, CA 94702 (US)
(74) Representative: Forresters IP LLP
(86) International application number: PCT/US2018/012692
(87) International publication number: WO 2018/140211

(56) References cited:
- CN-A- 105 191 698
- FR-A1- 2 856 886
- FR-A5- 2 198 512
- US-A- 3 765 134
- US-A- 4 047 033
- US-A- 4 055 161
- US-A- 4 088 120
- US-A- 4 194 949
- US-A1- 2006 193 066
- US-A1- 2010 212 718
- US-A1- 2011 259 422
- US-A1- 2013 055 999
- US-A1- 2016 202 459
- US-B1- 6 579 584
- US-B1- 6 623 821
- US-B2- 7 045 878
- US-B2- 7 985 920
- US-B2- 8 748 731
- US-B2- 8 915 244

## Description

### TECHNICAL FIELD

The present technology is directed generally to thin film housing structures for collecting solar energy, e.g., so as to convert the solar energy to other forms of energy, and/or use the solar energy for agricultural applications, and associated systems and methods.

### BACKGROUND

Many of the world's environments with plentiful solar energy are located in deserts, where high soiling rates create challenges for collecting the energy. One solution for collecting solar energy in these environments is enclosing solar collecting equipment inside a glasshouse. The glasshouse creates a wind-free environment, protecting the solar energy collection equipment, such as mirrors, photovoltaic (PV) cells, pipes and/or conduits, and other equipment. The glasshouse also protects the equipment from dust, dirt, sand, rain, and humidity.

However, a glasshouse has disadvantages. For example, a short span between support structures is generally used to provide sufficient structural resistance to wind. The short span between support structures results in a higher cost for building the glasshouse, due to the increased number of supports required. Another disadvantage is that glasshouses have support structures with significant portions located above the solar concentrators, and as a result, the support structures shade the solar concentrators, which reduces the amount of solar radiation available for conversion. Accordingly, there remains a need for structures that improve the cost efficiency with which solar energy is converted to steam (or other energy forms), and/or is used for other purposes, e.g., growing plants.

FR 2 856 886 discloses a structure having a set of parallel trusses (1), each presenting an arched unit (11) and a rod (12) for rigidifying the unit (11). The adjacent rods cross each other and form a crosspiece (13) on which a crossbeam (3) rests. Each truss is supported at its ends by vertical poles (5) constituted of a male part and a female part (52). The male and female parts slide on each other for permitting to adjust height of the pole.

### BRIEF DESCRIPTION OF THE DRAWINGS

Figure 1 is a partially schematic end view of a thin film housing structure configured in accordance with embodiments of the present technology.
Figure 2 is a partially schematic end view of a portion of the thin film housing structure shown in Figure 1.
Figure 3 is a partially schematic isometric illustration of a portion of a setup process for a thin film housing structure configured in accordance with embodiments of the present technology.
Figures 4A-4B are partially schematic plan views of two thin films configured in accordance with embodiments of the present technology.
Figure 5 is a partially schematic view of a thin film with fiber configured in accordance with embodiments of the present technology.
Figures 6A-6I are partially schematic plan views of portions of a thin film configured in accordance with embodiments of the present technology.
Figure 6J is a partially schematic view of the portions shown in Figures 6A-6I physically coupled together in accordance with embodiments of the present technology.
Figure 7A is a flow diagram illustrating a process for handling thin films in accordance with representative embodiments of the present technology.
Figure 7B is a partially schematic plan view illustration of a thin film being stretched in accordance with some embodiments of the present technology.
Figure 7C is a partially schematic illustration of a thin film installed on curved overhead support members in accordance with some embodiments of the present technology.
Figure 7D is a partially schematic illustration of a device for continuously processing a thin film in accordance with some embodiments of the present technology.
Figure 7E is a graph illustrating load as a function of time for a thin film locking process in accordance with some embodiments of the present technology.
Figure 7F is a graph illustrating load as a function of time for a thin film unlocking process in accordance with some embodiments of the present technology.
Figure 7G is a graph illustrating load as a function of time for a thermally cycled thin film in accordance with embodiments of the present technology.
Figure 7H is a graph illustrating tension and temperature as a function of time for a thermally cycled thin film in accordance with some embodiments of the present technology.
Figure 7I is a graph of tension and temperature as a function of time illustrating creep characteristics for a thin film in accordance with embodiments of the present technology.
Figure 7J is a graph illustrating test results of an unconditioned thin film compared to a conditioned thin film in accordance with embodiments of the present technology.
Figure 7K is a partially schematic, isometric illustration of a thin film structure configured in accordance with embodiments of the present technology.
Figure 7L is a partially schematic, side elevation view of the structure shown in Figure 7K.
Figures 8A-8D illustrate views of components for the thin film housing structures shown in Figure 1, configured in accordance with embodiments of the present technology.
Figure 8E is a partially schematic end view of a support guide configured for attaching thin film sheets in accordance with representative embodiments of the present technology.
Figures 8F-8I are partially schematic illustrations of a process for connecting two thin film sheets in accordance with embodiments of the present technology.
Figures 9A-9D schematically illustrate selected details of embodiments of the thin film housing structures with enclosed solar concentrators and solar receivers in respective incident sunlight contexts: low angle (Figures 9A and 9C) and high angle (Figures 9B and 9D).
Figures 10-17 are graphs illustrating results from simulations of a system configured in accordance with embodiments of the present technology.
Figure 18 is a partially schematic end view of a glasshouse structure configured in accordance with the prior art.
Figures 19A-19B are partially schematic end views of a glasshouse structure configured in accordance with the prior art juxtaposed with a partially schematic end view of a portion of a thin film housing structure configured in accordance with embodiments of the present technology.
Figure 20A is an illustration of a glasshouse structure configured in accordance with the prior art.
Figure 20B is an illustration of a thin film housing structure configured in accordance with embodiments of the present technology.
Figure 21 is a bar graph illustrating weight comparisons of a glasshouse structure in accordance with the prior art and a thin film housing structure configured in accordance with embodiments of the present technology.
Figures 22A and 22B illustrate representative techniques for venting a thin film enclosure in accordance with embodiments of the present technology.
Figures 23A-23C illustrate curved support members configured in accordance with some embodiments of the present technology.
Figures 24A and 24B illustrate portions of an enclosure having curved sidewalls and/or end walls in accordance with some embodiments of the present technology.
Figures 25A-25C illustrate curved support members and gutters configured to support thin film panels in accordance with some embodiments of the present technology.
Figures 26A and 26B illustrate a tool configured to facilitate a process for connecting thin film panels with corresponding support members in accordance with some embodiments of the present technology.

### DETAILED DESCRIPTION

The present invention provides a system for collecting solar energy and a method for assembling an enclosure for collecting solar energy, as claimed.

### Introduction

The present technology is directed generally to thin film housing structures or enclosures for collecting solar energy, e.g., for energy conversion, agriculture, and/or other purposes. The technology generally includes a housing structure with components configured to support the thin film. Components can include framing, fasteners, pipes and/or conduit, fittings, stabilizing bars, posts, hoops, and/or other suitable elements. The thin film can be composed of various suitable polymers and can be preconditioned (e.g., stretched), and/or supported under tension by the associated structural components. In some embodiments, the thin film can include fiber, wire, and/or tape (e.g., for improved strength). In some embodiments, the thin film can vary in thickness (e.g., so as to be thicker in locations that experience more stress) to improve strength. As described in more detail below, the thin film housing structure enables the transmission of solar energy into the housing structure, where one or more solar concentrators and receivers convert solar energy to another form of energy (e.g., heated steam or another heated working fluid, or electrical power). In some embodiments, the enclosure can be used for other applications, e.g., in agricultural applications, where the enclosure can replace a conventional glass or polyethylene greenhouse.

It is expected that by using thin film materials to transmit solar energy to the solar collection system within the enclosure, the overall production cost in a variety of applications, including energy production, agricultural production, drying, desalination, and/or others, can be significantly reduced, even if the initial cost of the structure itself is increased compared to conventional structures. In particular embodiments, the thin film and the supporting structure are arranged synergistically to provide both strength and cost efficiency.

Specific details of several embodiments of the disclosed technology are described below with reference to a system configured for collecting solar energy. In particular embodiments, the incident solar radiation is used to heat a working fluid, although, in other embodiments, the radiation can impinge on solar cells (e.g., photovoltaic or PV cells) for direct conversion to electricity, or can impinge on vegetation in an agricultural application. Moreover, although the following disclosure sets forth some embodiments in accordance with different aspects of the presently disclosed technology, some embodiments of the technology can have configurations and/or components different than those described in this section. Accordingly, the presently disclosed technology can include embodiments with additional elements and/or without several of the elements described below.

### Illustrative Structure

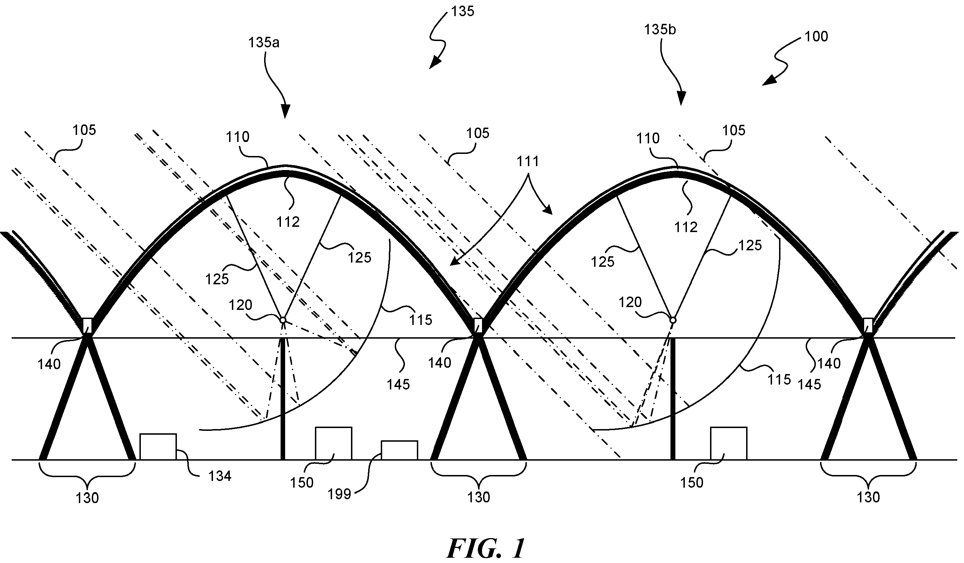

Figure 1 is a partially schematic end view of a system 100 that includes a housing structure or enclosure 135, which is used to collect solar energy, in accordance with embodiments of the present technology. As shown in Figure 1, the housing structure 135 can include multiple portions or segments 135a-135b and an overhead thin film 110, carried by an underlying support structure 111. The underlying support structure 111 can include multiple spaced-apart uprights 130 (e.g., A-framed uprights, or other suitable uprights) positioned along an axis extending into the plane of Figure 1, and curved overhead portions or support members 112. The underlying support structure 111 can support a receiver 120, which receives solar radiation 105 (e.g., light) that passes through the thin film 110 and is reflected by a solar concentrator 115. For example, the underlying support structure 111 can include rods, flexible cables, wires, and/or other tension members (collectively referred to as "support members" 125) from which the receiver 120 is suspended. The receiver 120 can in turn carry the solar concentrator 115 with similar tension members or other support members (not shown in Figure 1). In an arrangement shown in Figure 1, the receiver 120 extends into the plane of the Figure along a longitudinal receiver axis, and the curved overhead portions or support members arc overhead transverse to the receiver axis.

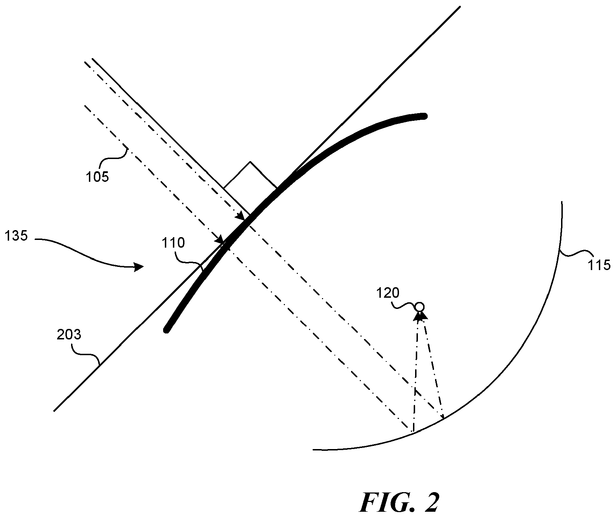

As shown in Figure 1, the thin film 110 protects the components inside the housing structure 135 and transmits the solar radiation 105 from the outside of the housing structure 135 to the inside. The thin film 110 can be composed of ethylene tetrafluoroethylene (ETFE), fluorinated ethylene propylene (FEP), polytetrafluoroethylene (PTFE), polyethylene (PE), polyethylene terephthalate (PET), another suitable polymer, and/or any suitable combination thereof. As an example, the thin film 110 can be composed of Mylar^{™} or Teflon^{™}. In some embodiments, the thin film 110 can be composed of polycarbonate. As supported (optionally in a stretched state) by the underlying support structure 111, the thin film 110 has a convex shape in the plane of Figure 1 to increase the amount of the solar radiation 105 transmitted into the housing structure 135, as further described later with reference to Figure 2, Figures 6A-6I, and Figures 7A-7K. As will also be described further below, ETFE may be particularly well-suited for installations in which the thin film 110 and the underlying support structure 111 synergistically provide a robust yet low cost alternative to glass structures and structures formed from thin films having other compositions.

With continued reference to Figure 1, the solar concentrators 115 can include line-focus reflectors that receive the solar radiation 105 and concentrate the solar radiation 105 along a focal line. The receiver 120 is positioned along the focal line to receive the concentrated solar radiation 105. The solar concentrator 115 is optionally rotated around its focal line to track the daily and/or seasonal movement of the sun to increase the total amount of captured and converted energy. Other embodiments of solar concentrators (e.g., point source concentrators, Fresnel concentrators, and others) are described in U.S. Patent No. 8,748,731. A tracking mechanism 150 can rotate or otherwise move the position of the solar concentrators 115, e.g., to increase the amount of solar radiation 105 received at the receiver 120. The tracking mechanism 150 can include a pneumatic, mechanical, hydraulic, or electrical motor to rotate or otherwise move the solar concentrators 115, and can include (or be under the direction of) a suitably programmed controller 199.

The receiver 120 operates as a light-to-heat transducer. The receiver 120 absorbs solar energy, transforming it to heat and transmitting the heat to a thermal transport medium such as water, steam, oil, or molten salt. Accordingly, the receiver 120 can be a pipe or conduit. Representative arrangements for supporting the receiver 120 and the solar concentrator 115 are described further in U.S. Patent No. 8,915,244.

The housing structure 135 can house PV cells, in addition to or in lieu of the receivers 120, to generate electricity from sunlight. In some embodiments of the present technology, concentrator PV cells and concentrated solar thermal power are combined into a single system that generates thermal energy and acts as a heat sink for photovoltaic cells that operate more efficiently when cooled.

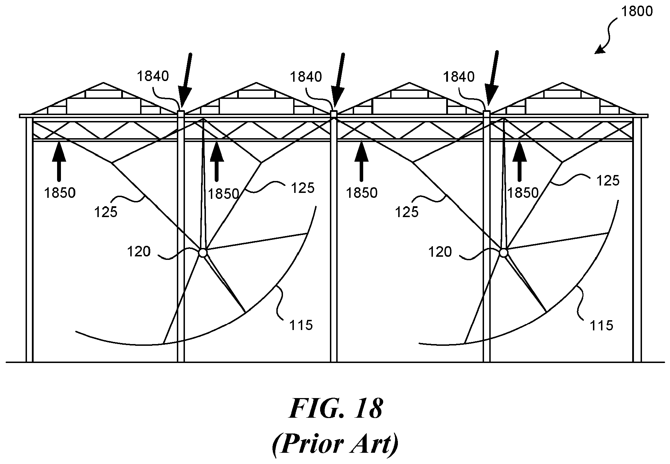

As shown in Figure 1, the housing structure 135 includes gutters 140. The gutters 140 collect water and/or cleaning solution and direct them to a centralized location or drainage system. The location of the gutters 140 is relatively low to the ground and generally not in the light path between the sun and solar concentrator 115. This location reduces shading and increases the amount of light received by the solar concentrators 115. More details regarding the gutters and shading are discussed later with reference to Figure 18.

The housing structure 135 can have other components; for example, an air handling unit (AHU) 134. The AHU 134 can operate to increase the air pressure inside the housing structure, which can prevent or at least restrict dust or debris from entering the housing structure 135 and keep pressure and/or tension on the thin film so that an angle of incidence between the sun and thin film is maintained. In some embodiments, the AHU 134 can dehumidify, humidify, filter (e.g., particulates and/or corrosive or other harmful gases), heat, and/or cool air entering the housing structure 135. A designer of the housing structure 135 can select the function of the AHU 134 based on conditions such as the operating temperature of equipment in the housing structure, the temperature and/or humidity of the air within the housing structure and/or the environment surrounding the housing structure 135, the temperature or humidity limitations of equipment in the housing structure, the cost of using the AHU 134, government regulations, and/or other suitable parameters.

One advantage of a thin film housing structure compared to a glass housing structure is that a thin film generally seals air better than glass in a housing structure. For example, conventional structures typically use rubber seals, e.g., between glass panes, but such seals can be expensive to install. In addition, such seals can be susceptible to sand ingress which increases maintenance costs. The improved seal provided by a thin film can reduce power usage (e.g., reduce parasitic power) consumed by the AHU 134, and/or reduce maintenance costs. The improved seal integrity may also have particular benefits for agricultural applications of the present technology, as described in further detail later.

In some embodiments, the housing structure 135 can include cleaning systems that attach to the top and/or side of the housing structure 135 and that can be used to clean the housing structure by spraying water, spraying cleaning solution, or using mechanical brushes. In other embodiments, other cleaning techniques such as vibrations (e.g., via sonic waves, ultrasonic waves, and/or other techniques) can be used.

The housing structure 135 can include a receiver inlet (e.g., a section of a pipe or conduit), a receiver outlet (e.g., a section of a pipe or conduit), connectors (e.g., pipe fittings), and multiple solar concentrators positioned to heat a fluid flowing through the receiver 120. More details regarding these elements are described in U.S. Patent No. 8,748,731.

Figure 1 also illustrates a reference plane 145, defined by the region between the spaced-apart uprights 130 and below the curved overhead portions 112. The reference plane 145 can intersect the solar concentrator 115 and can be used as a guide for positioning the gutters 140. For example, as shown in Figure 1, the gutters 140 are positioned near (e.g., 1-50 centimeters from) the reference plane 145. One advantage of positioning the gutters 140 near the reference plane 145 is that it can reduce shading as further described below with reference to Figure 18.

Figure 2 is a partially schematic end view illustration of components within a portion of the housing structure 135 shown in Figure 1, e.g., the thin film 110, solar concentrator 115, and receiver 120. Line 203 is tangential to the thin film 110. A high fraction of the incident solar radiation 105 is transmitted through the thin film 110 because the thin film 110 has a curved shape (e.g., parabolic, circular, or otherwise convex) that has improved light transmission over the course of the day (e.g., as the sun moves), compared to other geometries (e.g., a flat surface). This result can be achieved by curving the thin film 110 so that it mirrors, or approximately mirrors, the path that the sun travels, which increases the fraction of the solar radiation 105 that is received at or near a perpendicular angle and/or reduces scatter and/or reflections. Accordingly, the curved thin film 110 can increase the efficiency with which solar radiation is collected, compared to flat glass panels. Additionally, the curved thin film 110 can be stretched over a relatively large distance in a curved shape to provide space and a light path to accommodate large parabolic mirrors and enable the mirrors to have a large range of motion and receive a significant amount of light throughout the motion range.

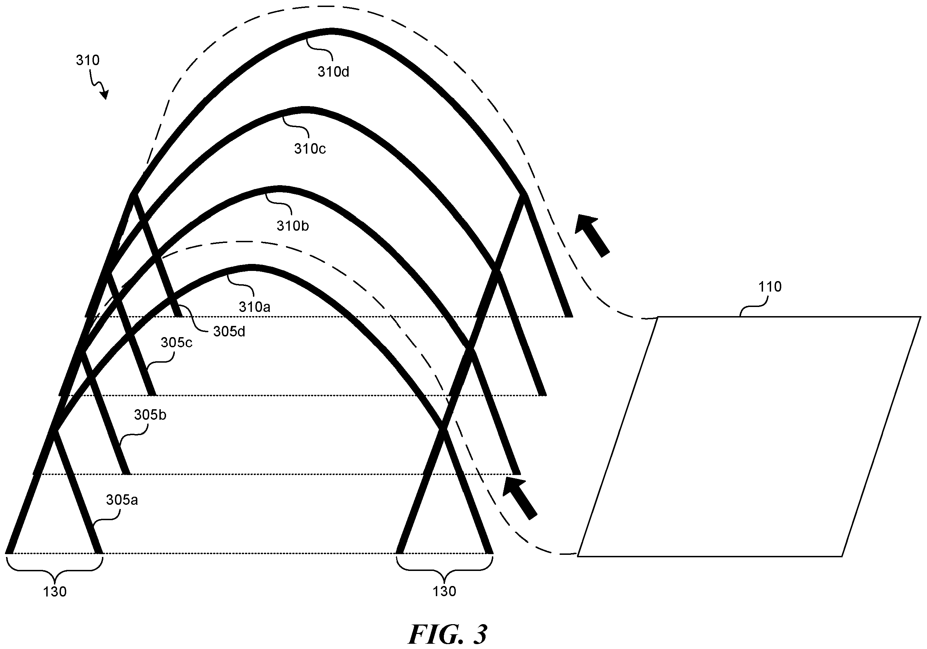

Figure 3 is a partially schematic isometric illustration of a portion of a setup process for a thin film housing structure configured in accordance with some embodiments of the present technology. Figure 3 illustrates structural elements that include multiple hoops 310 (shown as hoops 310a-310d), which are used to support the thin film 110. The hoops 310a-310d correspond to the curved overhead portions or members 112 shown in Figure 1. In some implementations, the hoops 310a-310d can be formed from aluminum or metal composites. As shown in Figure 3, the hoops 310a-310d are supported by the A-frame uprights 130. In other embodiments, the hoops 310a-310d can be supported by other uprights, such as straight posts. The A-frame uprights 130 includes straight portions 305a-305d that can be physically coupled to the hoops 310a-310d as shown in Figure 3. The hoops can be fabricated separately, composed of the same or different materials, have different sizes (e.g., thicknesses), and/or can be physically coupled together (e.g., welded).

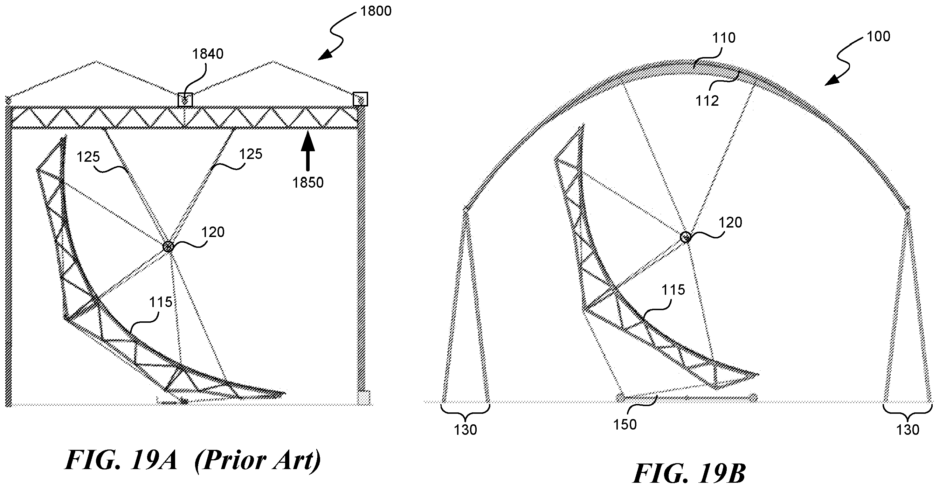

In general, the hoops 310a-310d and the uprights 130 are designed to withstand wind speeds that are higher than expected for the installation location (e.g., greater than 60 miles per hour for a Middle Eastern desert location). The uprights 130 and the hoops 31 0a-310d can be secured to the ground or a foundation using any of a variety of suitable techniques. With the uprights 130 and hoops 310a-d in place, the thin film 110 can be pulled over the hoops and secured to the hoops using fasteners. The hoops 310a-310d and/or the uprights can also support solar concentrators and/or receivers (e.g., that hang from the hoops). A single solar concentrator 115 (Figure 1) can be positioned below the set of hoops 310a-310d shown in Figure 3. Providing a 1:1 correspondence between the number of "peaks" of the structure and the number of receivers below can produce advantages described later with reference to Figure 19B.

### Representative Thin Films

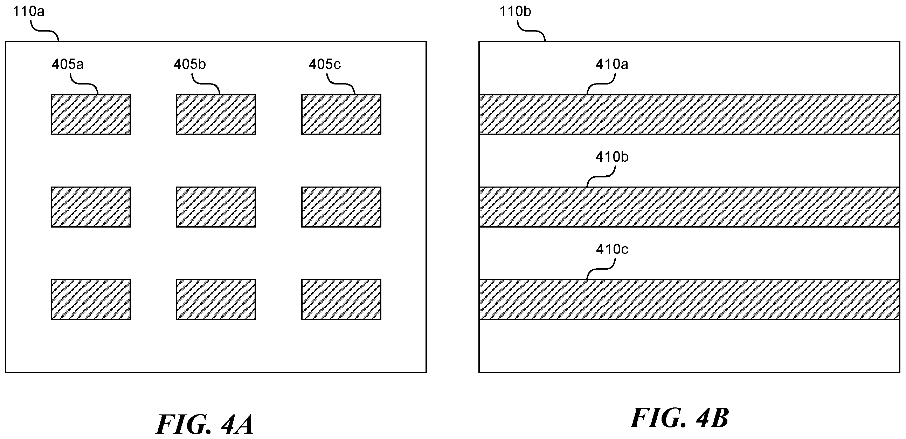

Figures 4A-4B are plan views of first and second thin films 110a, 110b configured in accordance with embodiments of the present technology. Each thin film 110a, 110b has particular zones, as described below.

The first thin film 110a shown in Figure 4A has multiple first zones 405a-405c, which have increased strength and/or resistance to heat relative to other portions of the first thin film 110a. In particular embodiments, the first zones 405a-405c can be created by locally heat-treating the first thin film 110a, or cold-working the first thin film 110a. Alternatively, the first zones 405a-405c can be created by increasing the thickness of the first thin film 110a in particular locations (e.g., by double-folding, fusing, melting, layering, and/or adding one or more coats of chemicals and/or other materials). The first zones 405a-405c can be positioned to attach to particular regions of the housing structure 135 shown in Figure 1. In some embodiments, the first zones 405a-405c are positioned in regions of the housing structure 135 with high tension (e.g., near corners, locking mechanisms, hoops, etc.) to provide additional strength and/or support. In some embodiments, the first zones 405a-405c are positioned in regions exposed to higher temperatures or heating rates (e.g., near a metal hoop or fitting) to provide additional thermal resistance and/or to prevent overheating. Although the first zones 405a-405c are shown in the middle of the thin film 110b, the first zones 405a-405c can be positioned at the edges of the thin film 110b in some embodiments.

Moving to Figure 4B, the second thin film 110b has multiple second zones 410a-410c, which have increased strength and/or resistance to heat, but the zones are arranged differently from the first zones 405a-405c shown in Figure 4A. In general, the second zones 410a-410c can be arranged in a manner to increase the strength of the housing structure and reduce or eliminate air leaks out of the structure. For example, because the underlying metal structure (e.g., including multiple hoops 305a-305d, shown in Figure 3) is a relatively good heat conductor, the second zones 410a-410c can be placed in direct contact with the metal structure to reduce (e.g., prevent) melting or deformation of the thin film. Additionally, the second zones 410a-410c provide increased material strength that allows the thin film to span large distances compared to a thin film without the second zones. A thin film that spans larger distances reduces shading because there are fewer structural components (e.g., fewer hoops) to support the film in position. Using fewer structural components can also reduce cost.

To increase (e.g., optimize) the amount of solar radiation that enters the housing structure 135 shown in Figure 1, the thin films 110 (shown as films 110a, 110b) should be thin, e.g., compared to typical glass panes. For example, representative thin films 110 can range from 50 microns to 250 microns thick and can have a suitable composition, such as ETFE, FEP, PTFE, PE, PET, a like polymer, or any combination thereof. Reducing the thickness of the films can also reduce cost.

As described above, in some embodiments, the thin film can include different portions having different materials, different strengths, and/or different heat resistances. An advantage of these arrangements is that the films can have features tailored to the specific applications to which they are applied. In some applications, the cost (e.g., material cost and/or installation cost) may outweigh the benefit of such specialized features, and accordingly, the thin film used in such applications may have uniform material properties, including strength and/or heat resistance.

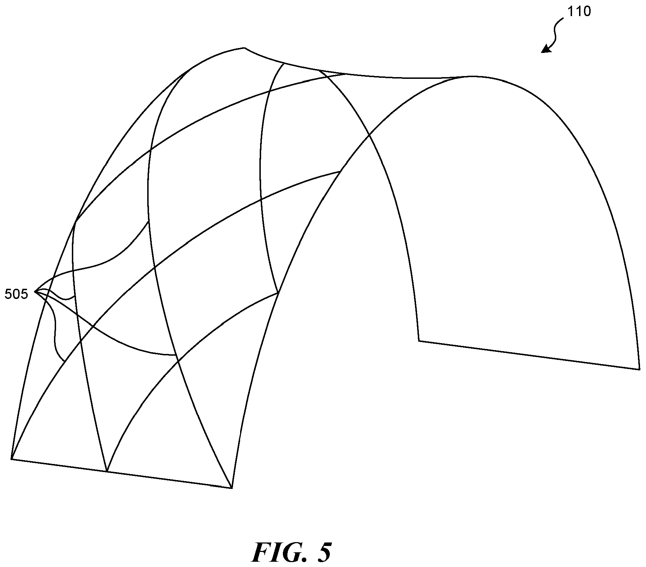

Figure 5 is a partially schematic view of a thin film 110 having fibers, filaments, strands, or other elongated flexible elements 505. The fibers 505 can be composed of metal, glass, Kevlar^{™}, carbon fiber, and/or other fibrous material (e.g., suitable for a desert climate). In some embodiments, the fiber is composed of a translucent, semi-translucent, transparent, or semi-transparent material to allow solar radiation to pass through the fiber and into the housing structure. In some embodiments, the thickness of the fibers 505 may be relatively small (e.g., from tens of microns to a few millimeters) to reduce the amount of shading inside the housing structure. The fibers can accordingly be thinner than, thicker than, or the same thickness as, the thin film itself. In any of these embodiments, the fibers 505 can strengthen the thin film 110, which enables the thin film to span a larger distance compared to a similar thin film without fiber.

The fibers 505 can be arranged in different configurations. For example, the fibers can be embedded in the thin film in a diamond pattern as shown in Figure 5, or can be arranged in another pattern, such as in straight lines positioned along the thin film. In some embodiments, the fibers 505 are positioned along the seams between neighboring thin film panels to enhance the strength of the thin film in areas of relatively high stress. Determining the pattern and the composition of the fibers included in the thin film can be based on reducing the scattering of solar radiation, increasing transmitted solar radiation into the housing structure, increasing the strength of the thin film, reducing shading, and/or reducing cost.

Several methods can be used to fabricate the thin film 110 with the fibers 505. In some embodiments, the fibers can be glued to a first thin film, and then a second thin film can be glued to the fibers and the first thin film (e.g., with the fibers "sandwiched" between the thin film layers). In some embodiments, the fibers can be melted, fused, or baked into the thin film. In some embodiments, the fibers can be formed or attached to the thin film based on a chemical reaction. Other methods of attaching or integrating the fiber into the thin film can include using tape or an adhesive material. And, in some embodiments, the cost of fibers may outweigh the benefit, and for this and/or other reasons, the thin film 110 can be manufactured without fibers.

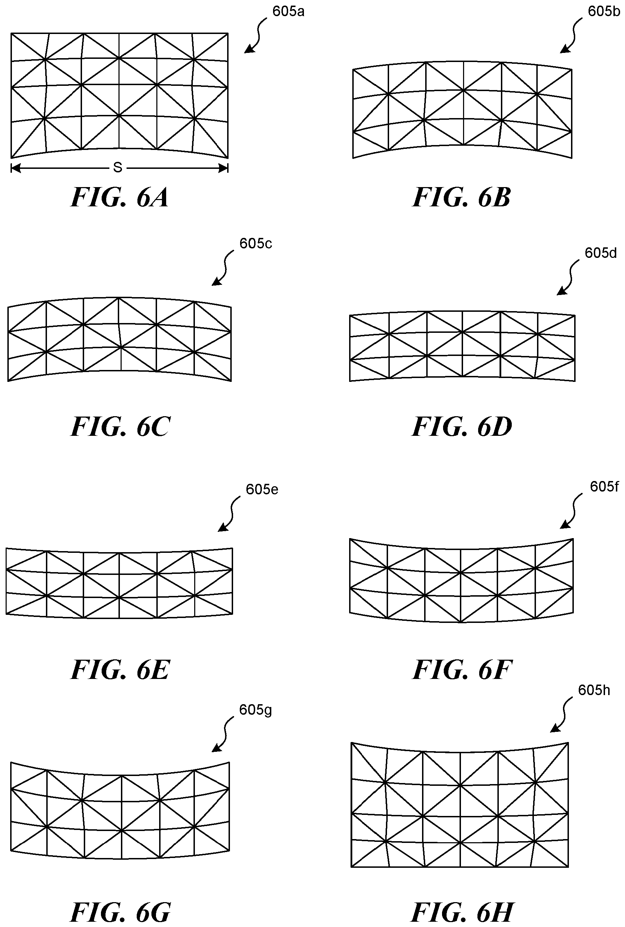

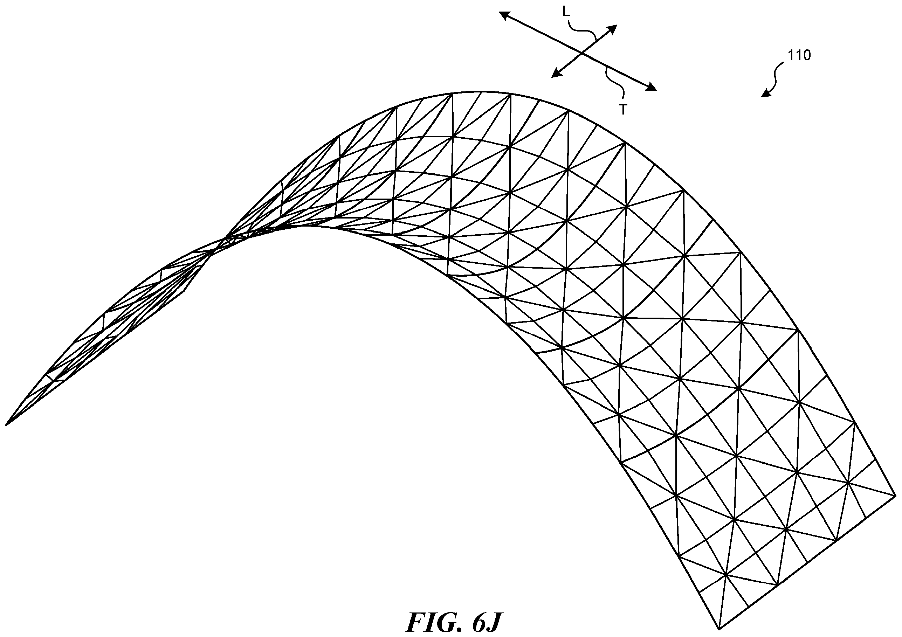

A representative method for fabricating the thin film 110 is shown in part in Figures 6A-6J. The method includes combining thin film portions 605 (e.g., first-eighth portions 605a-605h) to form a large thin film suitable for use in a housing structure. The larger thin film can span large distances S (Figure 6A) between hoops (e.g., four meters or more), which reduces shading and material cost by reducing the number of hoops in the housing structure. Each portion 605a-605h can have a different size and/or one or more curved edges. For example, a second portion 605b is larger than a third portion 605c. Also, the curvature of the second portion 605b is greater along the edges as compared to the curvature of the first portion 605a. One benefit of fabricating the thin film from portions having different sizes and different curvatures is that the portions combine to form a particular three-dimensional shape, such as the shape shown in Figure 6J. Although Figures 6A-6J show thin film portions with gridlines, these gridlines are for illustrative purposes only and do not imply any structural features.

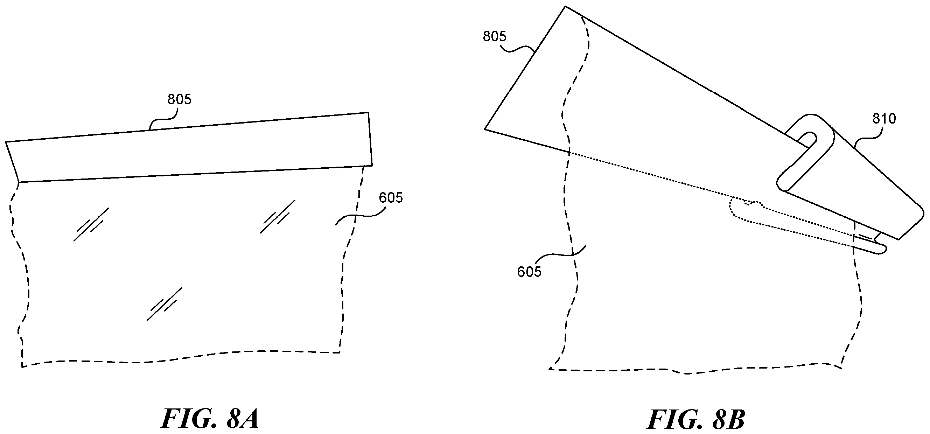

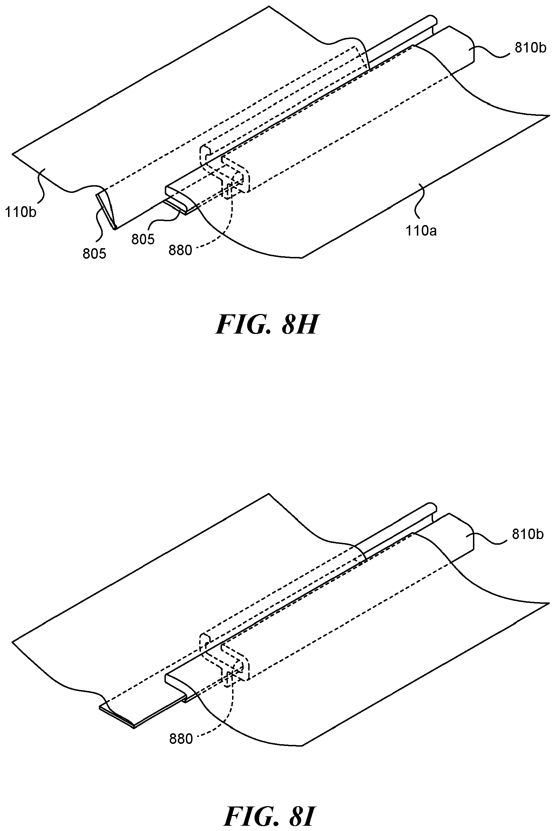

The portions 605a-605h can be physically coupled together in any of several suitable ways. In some embodiments, each portion is stitched to its neighbor. In addition to or in lieu of stitching, each of the portions 605a-605h can be melted or glued to its neighbor to fabricate a large thin film assembly. Also, the portions 605 can be attached or physically coupled together with a securing member and support guide, e.g., as described later with reference to Figures 8A-8I.

As shown in Figure 6J, the film portions 605a-605h are physically coupled together such that the resulting shape is anticlastic. An anticlastic shape is a shape with two different curvatures at a given point (e.g., a hyperbolic paraboloid or saddle-shape). For example, the thin film 110 shown in Figure 6J has one curvature in the longitudinal or axial direction L (of the overall structure) and a different curvature in the latitudinal or transverse direction T (of the overall structure). As used herein, the longitudinal axis L of the overall structure corresponds generally to the longitudinal axes of the receivers and the trough-shaped concentrators. The transverse axis T is transverse (e.g., perpendicular) to the longitudinal axis L. The anticlastic shape of the thin film results from different portions having different sizes and/or edges with different curvatures, produced, for example, by the shapes of the associated hoops 310 (Figure 3).

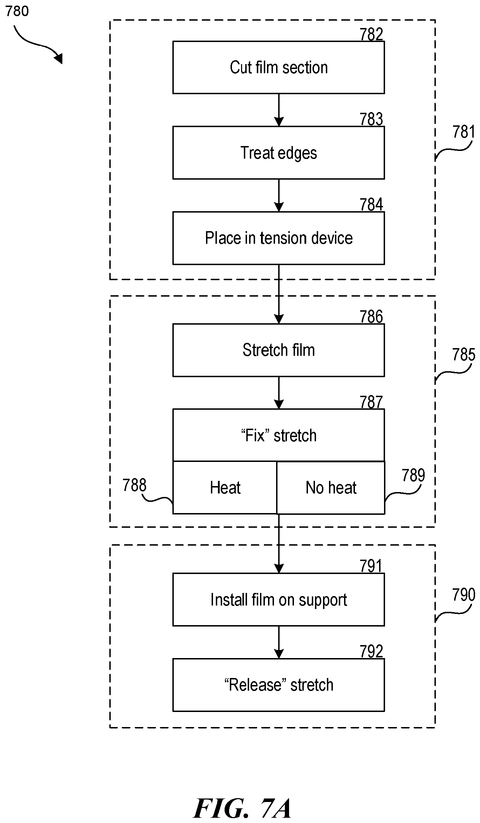

The anticlastic shape can produce one or more benefits. One benefit is that the anticlastic shape increases the amount of solar radiation that can be transmitted through the thin film, e.g., as a result of the tension on the thin film that creates the anticlastic shape. For example, the thin film 110 can be clamped to the supporting hoops and placed under tension to maintain the relatively smooth and curved surface of the thin film 110. Another benefit of the anticlastic shape is that it enables the film to be generally uniformly stressed (e.g., with stresses generally the same at all points of interest) and stable. Because the thin film can be uniformly stressed and stable, it can span large distances, which reduces the amount of supporting structure necessary to support it (e.g., compared to glass). In a particular embodiment, the thin film can have a pretension (e.g., created during the fabrication process of the thin film) and/or a post-tension (e.g., created during the process of fastening and securing of the thin film to structural components). For example, the film can be pre-stretched and then relaxed, prior to installing the film, which, as described with reference to Figures 7A-7L below, can produce a film that is stronger than an unconditioned film of the same thickness. It is expected that the impact of conditioning on solar radiation transmission (which may be negative) will likely be negligible.

### Representative Manufacturing Techniques

Figures 7A-7L illustrate representative processes and devices for manufacturing and processing thin films in accordance with embodiments of the present technology, along with representative resulting products. Figure 7A illustrates a process 780 for preparing and installing thin film components (e.g., sections or panels) in accordance with embodiments of the present technology. Block 781 includes preparation steps, block 785 includes stretching steps (and/or other preconditioning steps), and block 790 includes installation steps. Block 781 can include cutting a thin film section (e.g. from a larger roll or other thin film source), as indicated at block 782. At block 783, the process can include treating the edges of the film section. For example, block 783 can include reinforcing the edges (or only certain edges) to facilitate joining one thin film panel to another. Block 784 includes placing the film section in a tensioning device. Blocks 782, 783 and 784 may be performed in the sequential order shown in Figure 7A, in particular embodiments. As will be discussed later, in other embodiments, at least these processes can be performed in other orders. In still further embodiments, certain processes (e.g., block 783) can be eliminated.

The stretching process (block 785) includes stretching the film (block 786), e.g., from an initial state to a subsequent state, via the tensioning device. For example, for an ETFE film, the film can be stretched to 105%-250% of its initial length, and in a particular embodiment from 110%-130% of its initial length. The film can be stretched in one direction (uniaxial) or multiple directions (e.g., biaxial). For example, the film can be stretched in two perpendicular directions. At block 787, the stretch provided in the film is "fixed" or "locked." Accordingly, the stretch, or at least a significant fraction of the stretch, produced at block 786 is then preserved in block 787.

The locking process may be conducted using one or more of several suitable techniques. For example, block 788 includes heating the thin film. In a particular example, a thin film having an ETFE composition can be heated to a temperature of about 50° C for a period of about 10 minutes, which is expected to suitably lock the stretched state of the film. In other embodiments, the thin film can be heated to other suitable temperatures and/or for other suitable durations. For example, the film can be heated to a temperature of from about 40°C to about 80°C for a corresponding period of about 30 minutes to about 2 minutes. Accordingly, the amount of time the film spends at an elevated temperature to lock the film is generally inversely correlated with the temperature.

In another embodiment, the film can be locked without heat, as is indicated in block 789. Instead, the film can be kept at room or ambient temperature, and held under tension for a longer period of time (e.g. a longer period of time than if it were heated). For example, it is expected that an ETFE film at room temperature will be locked after remaining under tension for a period of over 30 minutes, and in a particular embodiment, about 60 minutes. In at least some transit scenarios (e.g., during which the film is transported from a manufacturing site to an installation site), the film can be kept at temperatures well below the temperature at which the film unlocks, to avoid inadvertently unlocking the film. In some embodiments, in addition to or in lieu of maintaining the film at a low temperature, the film can be rolled up tightly to prevent unlock (e.g., in cases for which the film is stretched unidirectionally). In some embodiments, the film can be stretched at or near the installation site to entirely avoid the issue of inadvertent unlock during shipping.

After the film has been fixed or locked, the tension on the film can be released. It is expected that the film will shrink by some amount after the tension is released. However, it is further expected that at a significant portion of the stretch will remain in the film for a long enough period of time to install the film and then release or unlock the film, as described further below. For example, if the film is stretched to 115% of its initial dimension, it may shrink to 107%-108% of the initial dimension after the tension is released. A representative ETFE film stretched to 110% may shrink to 105%, and if initially stretched to 130%, may shrink to 120%.

Process portion 790 illustrates a representative installation process. In block 791, the locked film is installed on a support, while in its locked, stretched state, but after having been released from the tensioning device described above. For example, the film can be attached to the curved portions 112 described above with reference to Figure 1. Once the film is installed, the process can further include releasing or unlocking the stretch (block 792). For example, the film can be heated to a temperature near its glass transition temperature. When the lock is released, the film shrinks back toward its original state. As a result of the restraining force provided on the film by the supports, the film remains under a significant amount of tension after having been released, and generally retains at least a portion of the stretch previously introduced to it.

In some embodiments, the film can be released or unlocked by actively heating the film to a suitable temperature, for example, via a powered heating device such as a propane-powered heat gun. In some embodiments, the film can simply be left exposed to the sun e.g., with or without an overlying black thermal blanket, so as to elevate the film to a suitable unlocking temperature, producing the desired level of tension on the installed film. In general, the thin film is deliberately not heated after being locked and prior to installation, to prevent inadvertently unlocking the film prematurely. For example, the thin film can be maintained at temperatures below 30°C (e.g., 20°-25°C) after locking and before unlocking.

One feature of the foregoing techniques is that they can include "locking" a target amount of stretch into the film prior to installation, and then releasing the lock after installation. An advantage of this approach is that the film does not need to be placed under tension while it is being installed. Instead, the film can be placed on the support structure, and attached to the support structure while in the pre-stretched state and then unlocked to place tension on the film. This can produce one or more further benefits. For example, this installation process is expected to be simpler than if the film required jigs or other tensioning hardware as it is placed on the support structure. Furthermore, when the film is unlocked or released, the tension provided by the film can synergistically interact with the structure to produce an overall stronger product. For example, the frame provided by the curved supports 112 can support the thin film above the ground, and, while the thin film is under tension, it can resist external forces on both the film and the curved supports 112. Accordingly, the overall structure can have a monocoque arrangement, similar to that of a commercial aircraft fuselage.

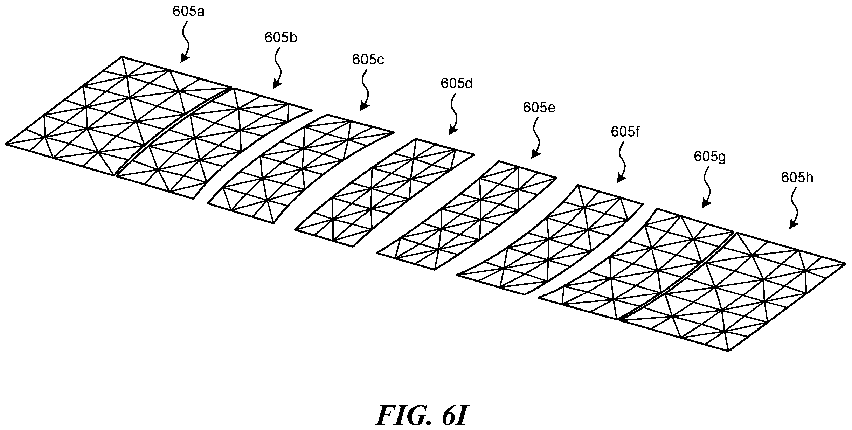

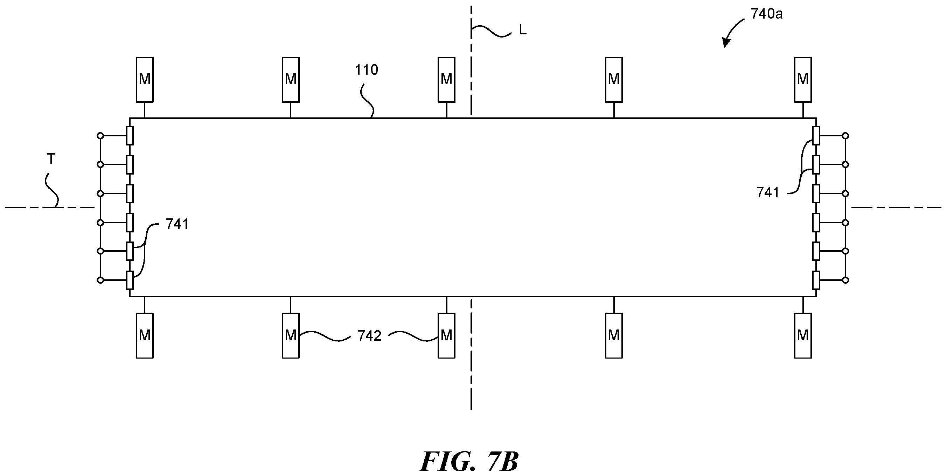

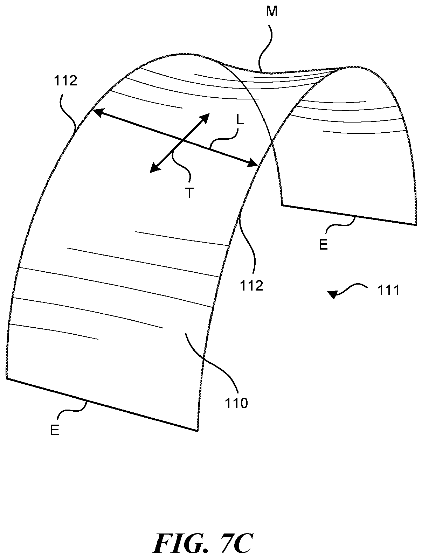

Figure 7B illustrates a representative device 740a for tensioning the film 110. In this embodiment, the ends of the film 110 are fixed via one or more grip elements 741. Accordingly, the dimension of the film 110 along its lengthwise axis (corresponding to the transverse axis T of the enclosure) remains fixed during the tensioning process. In other embodiments, the film 110 can be stretched along the transverse axis T, in addition to or in lieu of being stretched along its widthwise axis (corresponding to the lengthwise axis L of the enclosure), or another axis or axes. In an embodiment shown in Figure 7B, one or more tensioners 742 are attached to the opposing sides of the film 110, and actuated to stretch the film in the longitudinal direction L. In some embodiments, the amount of stretch provided to the film 110 can vary along its length. In particular, the film 110 can be stretched more toward the middle portion of its length than toward the ends. Accordingly, and as shown in Figure 7C, when the film 110 is attached to a corresponding support structure 111 having curved overhead portions 112, the end edges E (which are straight) will have a shorter arc length than the middle M, which is bowed. In this embodiment (unlike the embodiment described above with reference to Figure 6I), a single thin film panel with no internal joints, extends from one end edge of each curved portion 112 to the other.

In some embodiments, the single thin film panel can extend from one end edge E to the other, with a uniform stretch and arc length along the length in the longitudinal direction L. This approach can simplify the process for manufacturing the film 110.

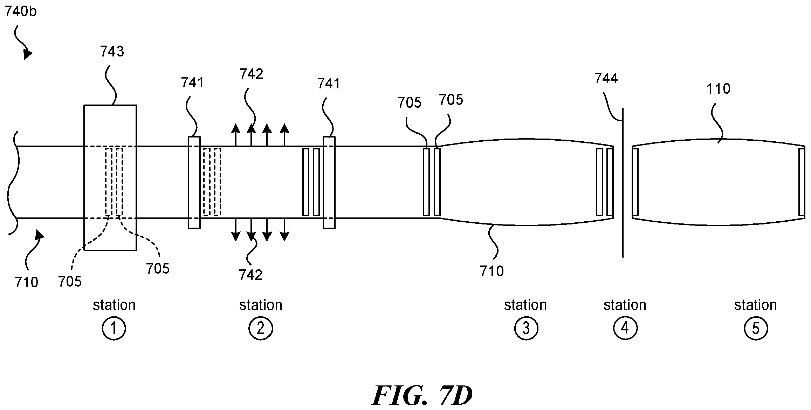

Figure 7B, described as above, illustrates a batch process for stretching a particular section of film 110. In some embodiments, the present technology can include a continuous or semi-continuous process for conducting the same operations. For example, Figure 7D illustrates a device 740b having multiple stations (labeled 1-5) for handling corresponding processes performed on the film 110. The film 110 can initially be in the form of a long continuous roll that is cut into individual sections as part of the overall process. A representative first station 1 can include an edge treatment device 743 that applies securing members 705 to the film 110 at or near the location at which the film 110 will be cut to form the end E shown in Figure 7C. At the second station 2, the device 740b can include grip elements 741 that engage with the film 110 to hold the ends in a fixed orientation, while tensioners 742 stretch the film 710 in its widthwise direction (longitudinal axis of the enclosure). The film can be stretched uniformly or in a manner that varies along the length of the film (as shown in Figure 7D), depending on the application. In a particular embodiment, the grip elements 741 and tensioners 742 can travel with the film 110 for the time it takes to lock the stretch into the film 110. In some embodiments, the film can be stretched in both its widthwise direction and its lengthwise direction, for example to provide more uniform tension in both directions. The lengthwise tension can be applied concurrently or non-concurrently with the widthwise tension.

At the third station 3, the grip elements 741 and tensioners 742 are released from the film 110. At the fourth station 4, a cutter 744 separates an individual section of the film from the overall uncut length of film 110, and at station 5, the cut section of the film is removed and readied for shipment, storage, and/or installation.

In some embodiments, the securing members 705 can be applied in other manners. For example, the securing members can be applied after the film 110 is cut, rather than before. In some embodiments, the securing members 705 can be applied along the lengthwise direction of the film 110, in addition to, or in lieu of applying securing members 705 along the widthwise dimension of the film 110.

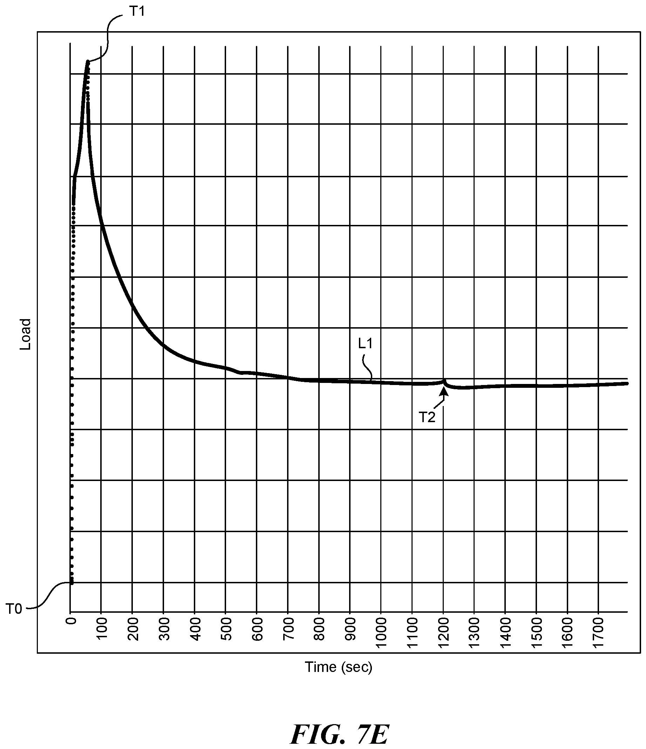

Figures 7E-7J illustrate representative results obtained by processing thin film samples (which may have different sizes depending upon the Figure), in accordance with the foregoing techniques. For purposes of illustration, and because the dimensions of the loaded elements vary, the load levels are illustrated qualitatively. Figure 7E is a graph of load as a function of time during a locking process, indicated by line L1. At time TO the thin film is under no tension and is at an elevated temperature (e.g., 50°C). The film is then placed under a high level of tension at time T1. While under tension (during the locking process), the film stretches, reducing the tensile force on the film. At time T2, the temperature of the film is allowed to decrease (e.g., to 23°C) to reduce the shrinkage once the tension is released. Once the tension is released, the load reduces to zero (not shown in Figure 7E), the tension on the film is released, and the film shrinks a relatively small amount from that point forward.

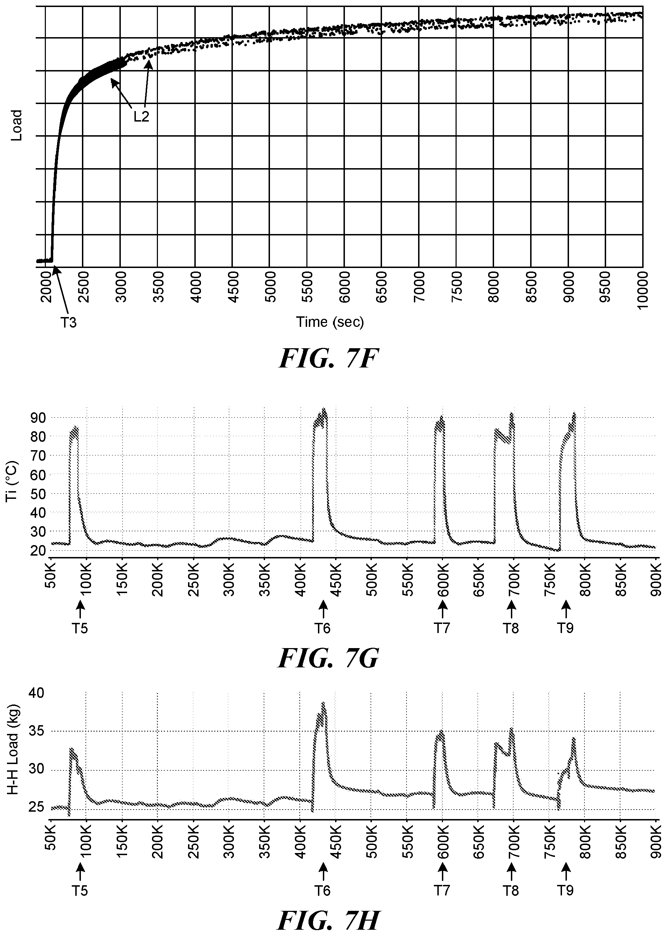

Figure 7F is a graph illustrating load as a function of time during an unlocking process, indicated by line L2. At time T3, the unlocking process is initiated, for example, by heating the film. Because the film has been fixed to a structure, for example, the structure shown in Figure 7C, the tension on the film increases and eventually stabilizes. It is this steady-state tension that keeps the film in the desired shape, and adds to the overall strength of the support structure to which the film is attached.

Figures 7G and 7H are graphs illustrating the results of thermal cycling tests performed on processed films, e.g., films that have been stretched at an elevated temperature, locked, and then unlocked to place them under tension. Figure 7G illustrates temperature as a function of time (in thousands of seconds), and Figure 7H illustrates the corresponding tension on the film. As shown Figures 7G and 7H, when the film is elevated to a temperature in a range between about 75°C and about 95°C, the load on the film increases, illustrating the heat-shrinking properties of the film. When the temperature is decreased, the film return to near-initial load levels. These graphs accordingly illustrate (a) that increasing the temperature of the film causes the tension in the film to increase, but to a level within acceptable limits, and (b) the effect is generally reversible. Accordingly, it is expected that the thermal cycling to which the film is exposed during normal use will not create a significant adverse effect on the performance of the film.

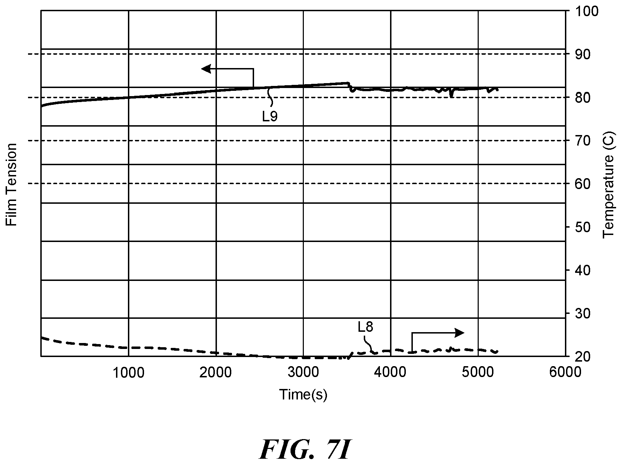

Figure 7I illustrates film tension (left axis) and temperature (right axis) as a function of time (lower axis) when the film remains at approximately room temperature. Line L8 indicates the temperature of the film and line L9 indicates the film tension. The result indicates that the film is stable and not subject to creep over a period of about 16 hours.

The foregoing sections describe time/temperature profiles and processes used to "lock" and "unlock" film stretch for installation purposes. It is known for at least some materials (e.g., ETFE, among others) that stretching the film can also increase the elastic modulus of the film. It is generally expected that the foregoing techniques for prestretching the film prior to installation, may also increase the elastic modulus of the film. For example, it is expected that the representative amounts of stretch applied to the film prior to installation (e.g., at least 5%) will also be sufficient to increase the elastic modulus of the film.

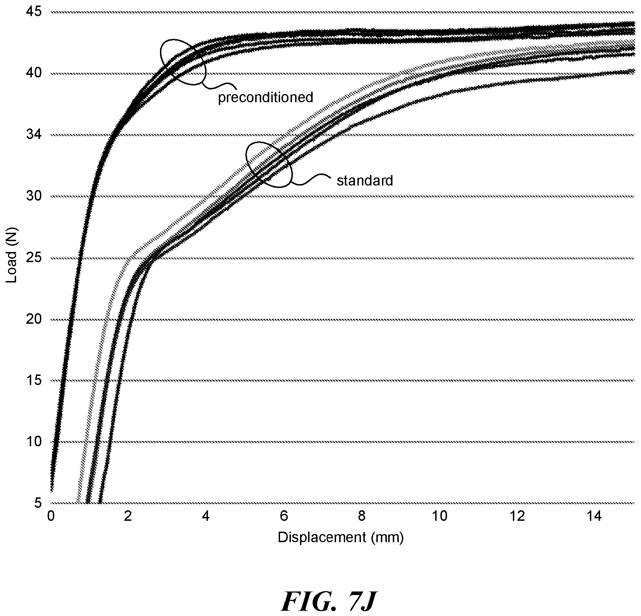

Figure 7J is a graph of stress vs. strain illustrating this result for representative samples. Two types of samples were tested: one set of standard, unconditioned samples, and one set of preconditioned samples. Both sets of samples were 100 micron thick ETFE film available from Asahi Glass Co. of Tokyo, Japan. Standard samples were placed in a tensile tester and stretched uniaxially to failure. Preconditioned samples were subjected to the following preconditioning steps prior to tensile testing:
- Stretched to 112% of initial length
- Locked via exposure to 50° C for 15 minutes
- Cooled to room temperature and removed from tension, which resulted in a final locked stretch of 108.5% - 109% after 24 hours
- Placed in tensile tester with 1% slack and exposed to 50° C until the tension level plateaued (an indication of unlock)

Then the preconditioned samples were stretched uniaxially to failure, in the same manner as the standard samples.

As shown in Figure 7J, the standard samples exhibit two distinct slopes in the elastic region (crystalline and amorphous region strain at different points). For the preconditioned samples, the second slope disappears between the elastic and plastic region. As a result, the preconditioned films will stretch less under a given load (in the plastic region) than the standard films will. Accordingly, under wind loading, for example, the preconditioned film will be less likely to stretch and flutter than the standard film will.

One advantage of using preconditioned (e.g., pretensioned and, optionally, locked) thin film for the housing structure is that doing so can reduce the probability of damaging the thin film due to fluttering, which can be caused by excessive stretch of the thin film resulting from large lift loads or creep. Another advantage is that preconditioned thin film can reduce the allowance for maximum film deflection close to the solar concentrators and hoops, which can reduce the thin film housing envelope. The thin film housing envelope is generally the exterior of the housing structure that is subject to wind, and it is preferable to reduce the size of the envelope, to reduce the resulting stress due to wind loads.

One advantage of the thin film housing structure compared to a corresponding glasshouse structure is that the thin film housing structure can be formed from larger transparent sections which can reduce the amount of structure required to support the sections. For example, the span between the hoops 310a-310d (shown in Figure 3) is approximately 5-15 meters whereas the span between corresponding roof bars for a glasshouse structure is significantly less than 5 meters (e.g., 1.25m)) because the glass panes are typically only 1.25m wide.

A larger span reduces the cost of materials required to build the housing structure. Additionally, fiber, wire and/or tape reinforcements, preconditioning the thin film, and/or the anticlastic shape of the thin film enable the thin film to span long distances and maintain strength even in high wind conditions.

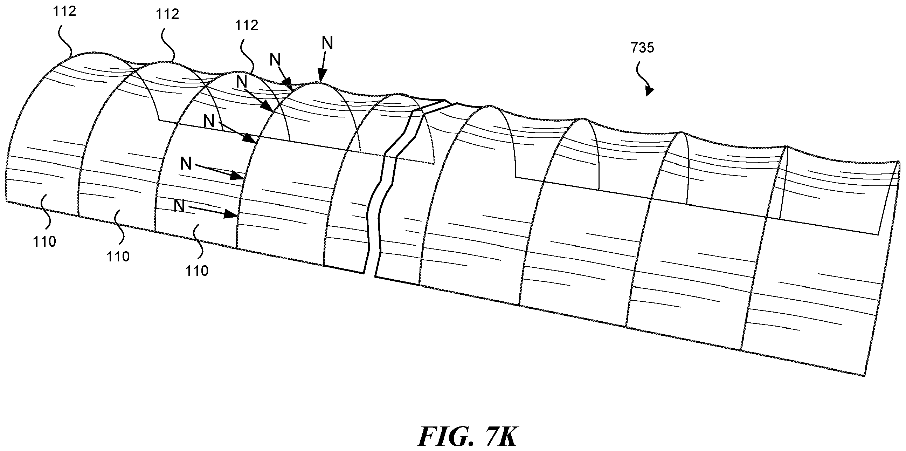

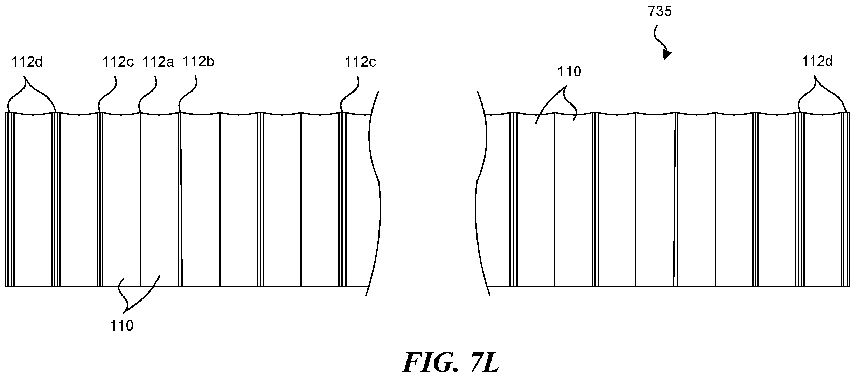

Figures 7K and 7L are partially schematic isometric and side views, respectively, of a representative structure 735 formed from panels of thin film 110. As shown in Figure 7K, the structure includes curved support elements 112 that carry the thin film panels 110. The thin film panels 110 can be pre-stretched and placed under tension after installation, as discussed above.

In at least some embodiments, individual curved support elements 112 are subjected to different loads and/or perform different functions, depending upon where in the structure they are located, and can accordingly have different strengths and/or shapes. For example, as indicated in Figure 7L, the curved support elements 112 can be of four different types and can provide one of four different levels of support, primarily in the normal direction N and indicated in Figure 7K. For example, a first curved support element 112a can have a relatively low level of strength in the normal direction N and can be used primarily to join neighboring thin film panels 110 and hold them, in tension, in the desired shape. Second support elements 112b can be stiffer in the normal direction N and can support other elements in addition to the thin film panels 110. For example, the second structural elements 112b can support the weight of a solar concentrator and corresponding receiver described above with reference to Figure 1 (and/or other elements). In a particular embodiment, the first curved elements 112a are alternated with the second curved elements 112b to provide a suitably high level of strength, and a suitably low cost.

A third support member 112c can have a higher stiffness in the normal direction N than either the first or second curved members 112a, 112b and, in addition to supporting other elements, can prevent the progression of a failure beyond the limited area bounded by pairs of third support members 112c. For example, if a thin film panel 110 fails, and the failure progresses beyond one panel and beyond one or more second curved elements 112b, the third curved element 112c can prevent further progression of the damage.

The structure 735 can further include fourth curved support elements 112d having the function of counteracting the accumulated tension over the length of the structure 735 caused by each individual thin film panel 110 being under tension. In a particular embodiment, each end of the structure 735 can include two fourth curved support elements 112d, and in other embodiments can include other numbers of fourth curved support elements 112d.

The spacing between adjacent curved elements 112 can vary from one portion of the enclosure to another. For example, the spacing can be closer in regions of higher loads, e.g., toward the edges, ends, and/or walls of the structure. The material characteristics of the films can be changed in those regions, in addition to or in lieu of changing the spacing between curved elements. For example, the thickness of the material, material strength, and/or presence of reinforcing elements (e.g., filaments or fibers) can be adjusted in regions of high loading.

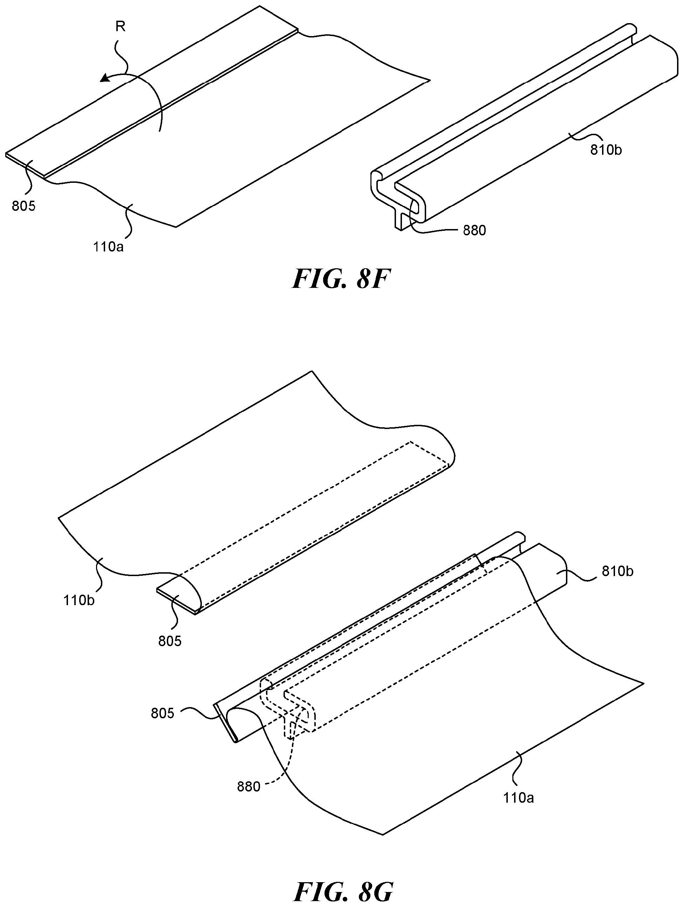

In any of the foregoing embodiments the curved support elements at the ends of the structure 735 balance the tension of the film panels 110 over the length of the structure 735. In a particular embodiment, each panel 110 is approximately 2.5 meters wide and approximately 12 meters long. In the illustrated embodiment shown in Figure 7L, the first curved support elements 112a are alternated with the second curved support elements 112b and third curved support elements 112c are positioned every 15 meters, with one or more fourth curved support elements 112d positioned at the ends of the structure 735. In other embodiments, the structure 735 can include other suitable arrangements of curved support elements having varying strength levels in the normal direction. Further details of techniques for accomplishing the strength or stiffness variation are described later with reference to Figures 8F-8I. The thin film panels described above can be stretched for purposes in addition to creating tension when installed. For example, in some embodiments, the starting width of the thin film can be stretched by an amount that increases the "locked" width of the thin film panels. This approach allows initially undersized panels of film to be attached to the supporting structure without using stretching jigs during installation. After installation, the thin film can be unlocked, as described above. In a particular embodiment, the thin film is stretched by 6% to increase its width, and by an additional 3% to provide post-installation tension. This is significantly greater than the 0.5% amount stretch typically used in the industry.

### Representative Housing Structure Components

Figures 8A-8I illustrate views of components for the thin film housing structures shown in Figure 1. In particular, Figure 8A illustrates a securing member 805 that can be used to support, hold, and/or secure any of the portions 605 (e.g., portions 605a-605h) of the thin film 110 described in Figures 6A-6I. The securing member 805 can include a plastic bar, plastic cylinder, metal bar, metal cylinder, or other material and/or shape suitable to support, hold, and/or secure an individual portion 605 of the thin film 110. In some implementations, the portion 605 is wrapped around the securing member 805, and in other implementations the portion 605 is taped, glued, stitched, welded, and/or melted to the securing member 805. In still further implementations, two securing members 805 are used to hold, secure, and/or support (e.g., pinch) the portion 605.

The securing member 805 and the film portion 605 can be physically coupled to a support guide 810 as shown in Figure 8B. In some embodiments, the securing member 805 and the portion 605 slide into the support guide 810. In some embodiments, the support guide 810 can be flexible and wrapped around the securing member 805, which is physically coupled to the film portion 605.

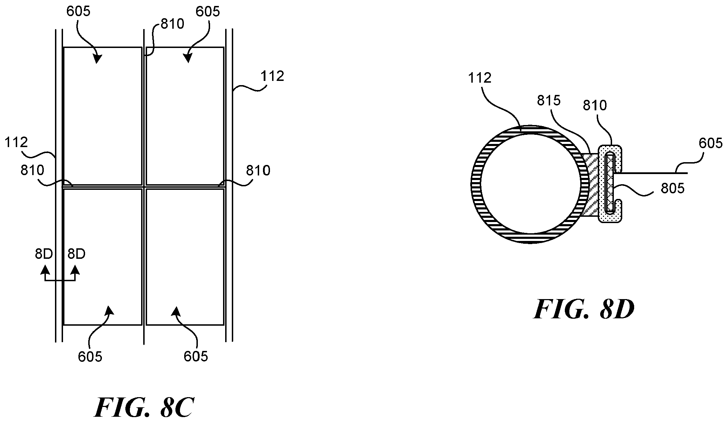

The film portion 605 can be physically coupled to the curved portion 112 (shown in Figure 1) of the housing structure as shown in Figure 8C. In particular, four thin film portions 605 are attached to support guides 810 in Figure 8C. Also, multiple support guides 810 can be physically coupled to the curved portion 112, e.g., to enable the attachment of multiple portions of the thin film at multiple locations on the curved portion 112.

Figure 8D is an enlarged cross-sectional view of a portion of the assembly shown in Figure 8C. The assembly includes an attaching element 815 that can be used to physically couple the support guide 810 (which is, in turn, connected to the film portion 605 via the support guide 810 and the securing member 805) to the curved portion 112. The attaching element 815 can include metal, Velcro^{™}, plastic, and/or other suitable materials. In some implementations, the attaching element 815 is a clamp or fastener configured to attach support guide 810 to the curved portion 112. Although Figure 8D illustrates the support guide 810 physically coupled to the curved portion 112, the components can be physically coupled to other portions of the housing structure such as the uprights 130 or the gutters 140 (Figure 1). Additionally, in some implementations, the attaching element 815 can have other configurations, e.g., bolts, screws, and/or other fasteners.

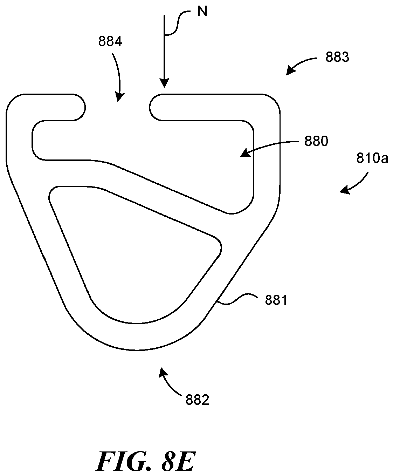

Figures 8E-8I illustrate further arrangements for attaching and supporting thin films 110 in accordance with representative embodiments of the present technology. Referring first to Figure 8E, a representative support guide 810a includes a receiving channel 880 and a brace 881 that provides for stiffness in the normal direction N. When installed, the support guide 810a, which is seen from its end in Figure 8E, is bent in a convex arc (as shown in Figure 7K), with a lower portion 882 pointing inwardly toward the center of the arc and an upper portion 883 pointing outwardly from the center. The upper portion 883 includes a gap or opening 884 into the receiving channel 880, which receives the corresponding thin films.

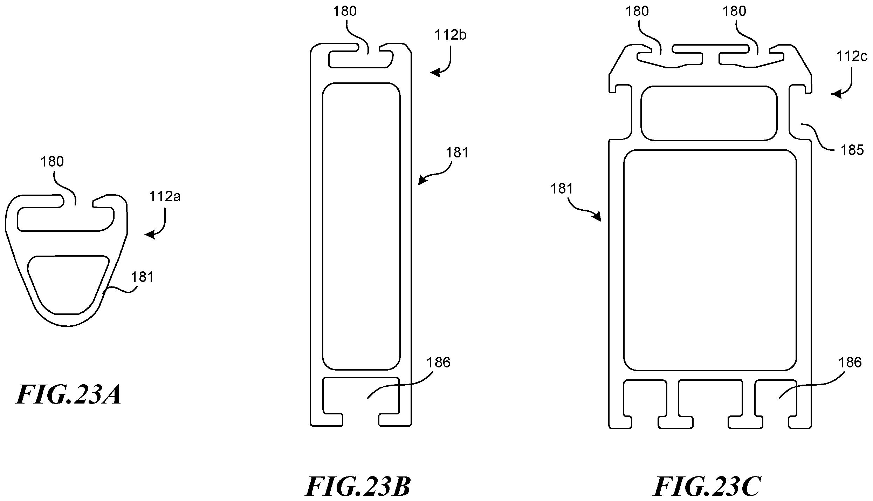

In some embodiments, the support guide (e.g., the support guide 810a shown in Figure 8E) operates as the curved overhead portion of support member (e.g., the support member 112 described above with reference to Figure 1), rather than being attached to a separate support member. Accordingly, in addition to connecting adjacent thin films, the support guide or support member 810a can support or hold the thin films in position, relative to a gutter 140 (Figure 1) or other element of the overall support structure 111 (Figure 1). Further details are described later with reference to Figures 23A-26B.

Figures 8F-8I illustrate a representative sequence for joining two thin films 110a, 110b with a representative support guide 810b. The support guide 810b has a configuration that differs from the one shown in Figure 8E, but the operation for both is generally the same. Each thin film 110a, 110b can include a securing member 805, for example, a strip or slat which may be attached to the thin film 110a, 110b with an adhesive or other suitable bonding technique. For additional strength, the thin films 110a, 110b can be rotated about the securing member 805, as indicated by arrow R to wrap the ends of the thin films 110a, 110b around the corresponding securing members 805. The securing members 805, with thin films attached, are then inserted, one after and above the other, into the receiving channel 880, as shown in Figure 8G-8I.

The support guides/support members shown in any of Figures 8A-8I (and referred to generally as "support guide 810" or "support member"), alone or in combination with other elements, can form the curved support elements described above with reference to Figure 7K. As discussed with reference to Figure 7K, different curved support elements can have different strengths. One way of accomplishing this variability is to change the shape of the support guide 810. For example, a lightweight support guide 810a can have a relatively small brace 881. A more heavyweight support guide 810a can have a brace 881 that extends further away from the receiving channel 880, providing for additional depth and therefore strength in the normal direction N. In addition, the support elements can be strengthened by ganging them together at a single location, and/or by reducing the spacing between neighboring curved support elements. Further details are described later in the context of Figures 23A-26B

### Representative Installations

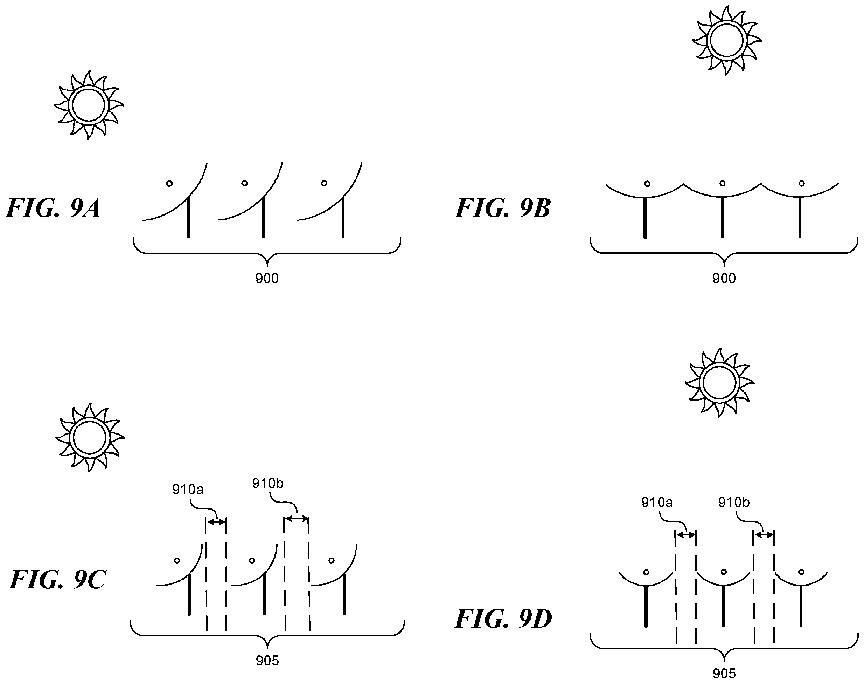

Figures 9A-9D schematically illustrate selected details of embodiments of the housing structures having different internal arrangements of solar concentrators. Figures 9A and 9B illustrate the concentrators arranged with a high "fill ratio," and Figures 9C and 9D illustrate the solar concentrators arranged with a lower fill ratio. Figures 9A and 9C illustrate the housing structures during the morning or evening, when the sun is low in the sky, and Figures 9B and 9D illustrate the housing structures during mid-day, when the sun is high in the sky. The concentrators are rotated under the guidance of a controller coupled to, e.g., the tracking mechanism 150 shown Figure 1, to track the sun during the course of the day.

The housing structures have footprints 900 and 905, which are generally equal. The footprint is the ground space (e.g., surface area) covered by the structure. The fill ratio is the ratio of the ground area covered by the solar concentrators to the ground area covered by the housing structure (e.g., the footprint). For example, if the solar concentrators in a housing structure cover 100% of the ground, then the fill ratio is 100%. If the solar concentrators cover less than 100% of the ground in a housing structure (e.g., 65%), then the fill ratio is less than 100% (e.g., 65%).

The solar concentrators shown in Figures 9A-9B cover nearly 100% of the ground space in the housing structure, whether the solar concentrators are pointed straight up (Figure 9B) or at a lower inclination angle (Figure 9A). By contrast, the solar concentrators shown in Figures 9C-9D cover less than 100% of the ground (e.g., 65%), whether the solar concentrators are pointed straight up (Figure 9D) or at a lower inclination angle (Figure 9C). In particular, the solar concentrators in the housing structures illustrated in Figures 9C-9D are spaced apart, as shown by spaces 910a-910b, which reduces the fill ratio. The spaces 91 0a-910b can be a few inches to a few feet (or a few centimeters to a few meters).

### Performance Simulations

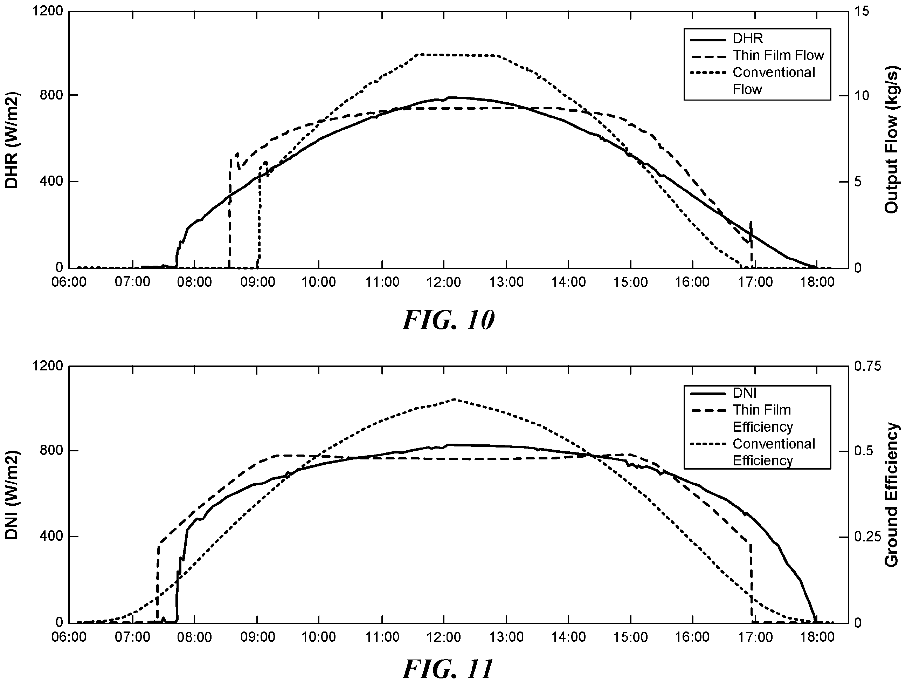

As a general overview, Figures 10-17 compare the performances of (a) a thin film housing structure with a fill ratio of less than 80% (e.g., 65%-75%) to (b) a glass housing structure with a fill ratio of greater than 90% (e.g., 95% or more). The thin film housing structure has concentrators oriented along north-south axes, and the glass housing structure has concentrators oriented along east-west axes. Each housing structure was designed (e.g., optimized) to account for its concentrator orientation. Although the thin film housing structure has a lower fill ratio than the glass housing structure, the thin film housing structure produces only slightly less energy compared to the glass housing structure (as seen in the simulation results). One reason the thin film housing structure can produce only slightly less energy with a lower fill ratio is because the gutters in the thin housing structure are positioned to reduce shading compared to the gutters in the glass housing structure. Another reason the thin film housing structure can produce only slightly less energy with a lower fill ratio is because the thin housing structure has less support structure that is in the light path to the solar concentrators, whereas the glasshouse has more support structure in the light path to the solar concentrators, which shades the solar concentrators. Yet another reason is a smaller fill ratio reduces shading of solar concentrators by other solar concentrators during the morning and afternoon as compared to a high fill ratio where the solar concentrators can experience increased shading.

The graph in Figure 10 illustrates simulation results for a high direct normal irradiance (DNI) day with typical weather, e.g., a hot summer day in Oman with minimal cloud coverage. The simulation compares an output flow of steam for the thin film housing structure (also referred to as "thin film") to the glass housing structure (also referred to as "conventional"), where the thin film results are indicated in dashed lines and the conventional simulation results are indicated in dotted lines. Direct hemispherical reflection (DHR) is represented with a solid line. On the x-axis is time of day, on the left y-axis is energy (in Watts/m²) for DHR, and on the right y-axis is the output flow rate of produced steam (in kg/s). For the thin film structure, the solar concentrators begin to reflect sunlight onto the receiver earlier in the morning than the conventional structure because of the reduced shading (due to the position of the gutters) and the lower fill ratio. For example, from about 8:30 a.m.to almost 10:00a.m., the thin film structure produces a higher output flow rate compared to the conventional structure.

Also, the graph in Figure 10 illustrates that the thin film housing structure has a relatively flatter and lower maximum profile for the output flow throughout the day, as compared to the conventional glass structure, which has a higher peak and experiences more change throughout the day. One advantage of a configuration with a reduced fill ratio is that the energy delivered by the concentrators is more consistent over time (e.g., small peak, flat profile), as compared to the energy delivered by concentrators positioned with an increased fill ratio. It is generally easier for the end user to control and regulate a generally consistent energy source than a source that has larger gradients and experiences more changes throughout the day.

Similar to Figure 10, Figure 11 illustrates simulation results for a high DNI day. In contrast to DHR and output flow of steam in Figure 10, the graph in Figure 11 illustrates simulation results in terms of DNI, shown on the left y-axis, and ground efficiency, shown on the right y-axis. Ground efficiency is generally an efficiency ratio comparing solar radiation received at solar concentrators in a housing structure compared to an area of ground equivalent to the footprint of the housing structure. For example, a ground efficiency of zero indicates no solar radiation is received at the solar concentrators in the housing structure (e.g., night time) and a ground efficiency of 1 (or 100% efficiency) indicates 100% of the ground in a housing structure is covered by solar concentrators and all the solar concentrators are receiving solar radiation (e.g., at 12:00 p.m. with a 100% fill rate).

On the left side of Figure 11, the graph illustrates that ground efficiency is zero when there is no solar radiation (e.g., nighttime) and increases as more solar radiation is received (e.g., as the sun rises in the morning). The ground efficiency of the thin film housing structure is different than the ground efficiency for the conventional structure at least because the thin film housing structure has a lower fill ratio and because the gutters of the thin film structure are in a lower position than the gutters of the glass housing structure. For example, at 12:00 p.m., the thin film structure has less shading than the conventional structure at least due to lower position of gutters out of the light path.

An overall comparison of simulation results for the two housing structures is derived by comparing the area under the curves (e.g., obtained by integration) for the thin film and conventional housing structures. The comparison of areas indicates that the thin film housing structure converts less solar radiation than the glass housing structure, but the difference can be outweighed by the benefits in reduced material costs, reduced infrastructure costs (e.g., small pumps), and relatively smooth output of the thin film housing structure.

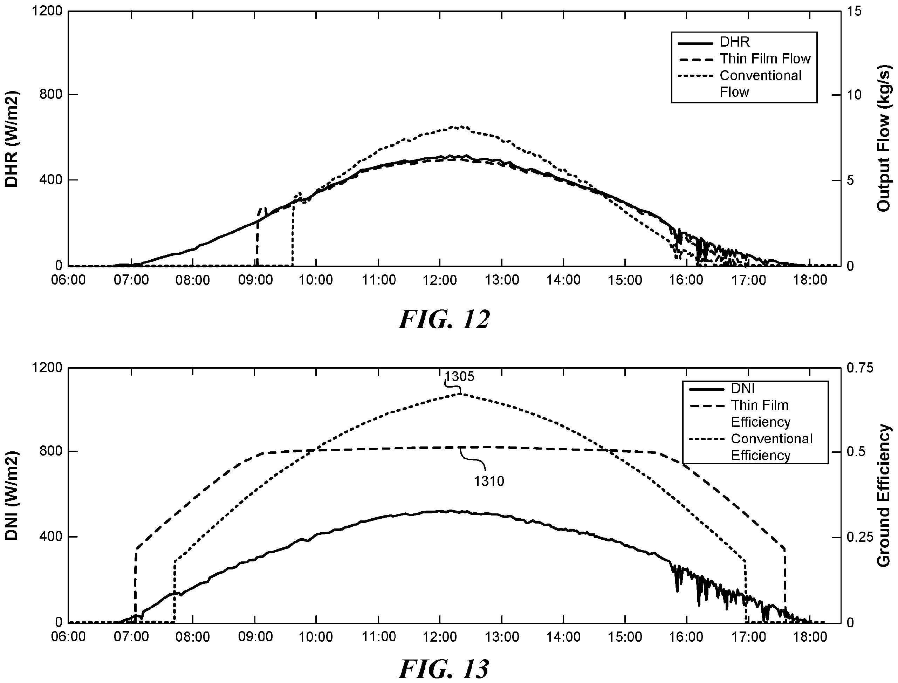

In contrast to the high DNI day simulation results shown in Figures 10 and 11, the graphs in Figures 12 and 13 illustrate simulation results for an average day, e.g., an average summer day in Oman. Similar trends to those of Figures 10 and 11 appear in Figures 12 and 13. Figure 13 also includes first and second observation points 1305 and 1310. The first observation point 1305 shows the maximum ground efficiency for the conventional structure and the second observation point 1310 shows the maximum ground efficiency for the thin film structure. Although the first observation point 1305 for the conventional structure is higher, the first observation point 1305 can be too high to effectively generate steam. For example, the conventional structure may have such a high efficiency at 12:00 p.m. that a steam generation plant may not be sized properly to handle the additional energy received, and the additional energy may be wasted (e.g., not converted from heated fluid to steam). In contrast, the thin film housing structure has a lower second observation point 1310, which can make it easier for the end user (e.g., a steam generator) to avoid a maximum that is too high. Additionally, the thin film structure has a smoother and more gradual rise to the maximum output, which is beneficial to an end user.

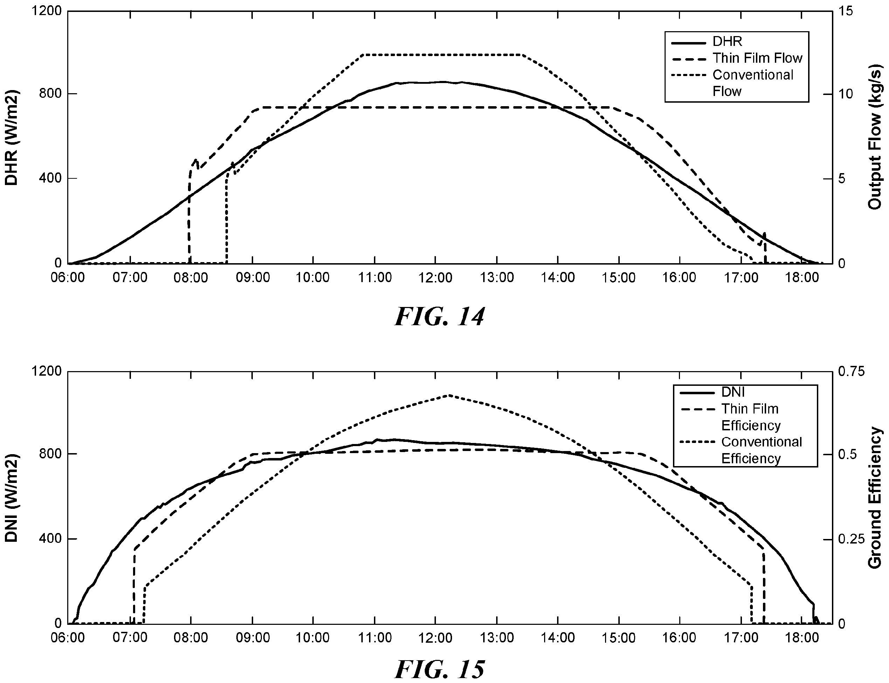

In contrast to Figures 12 and 13 which illustrate results for an average day, the graphs in Figures 14 and 15 illustrate simulation results for one of the highest DNI days, e.g., one of the hottest clear summer days in Oman with temperatures over 48 degrees Celsius. Similar trends from Figures 10 and 11 and Figures 12 and 13 appear in Figures 14 and 15.

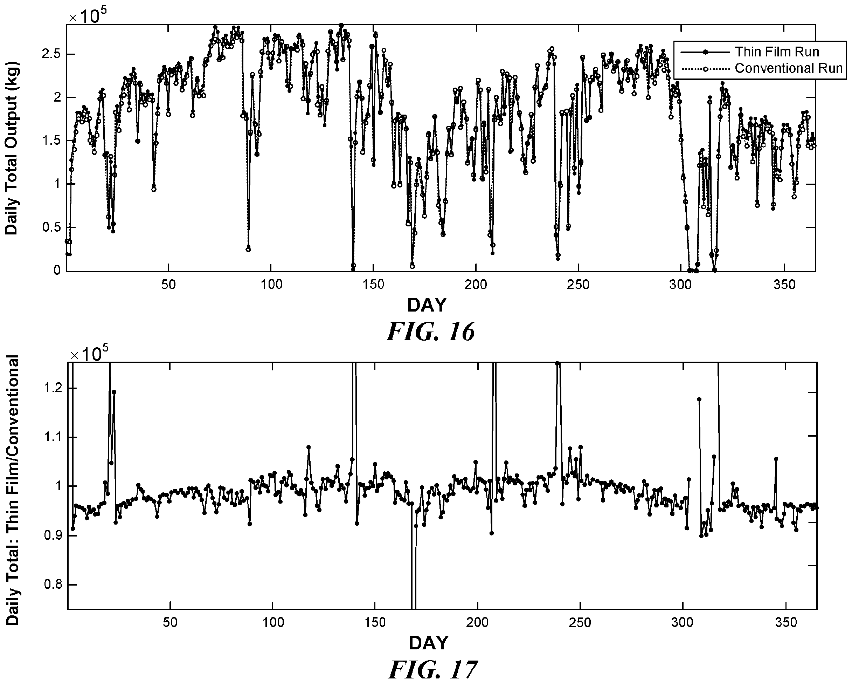

Moving from daily simulation results to annual simulation results, Figures 16 and 17 are graphs illustrating simulation results for a one-year period. As shown in Figures 16 and 17, the x-axis is in days (e.g., 365 days) and the y-axis is in daily total output of steam in kilograms (kg).

The graph in Figure 16 illustrates that the thin film structure over a one-year run produces a similar amount of steam as the conventional structure. Further, although there are some days when the conventional structure produces more steam, the thin film structure generally produces a similar amount of steam over the whole year.

The simulation results shown in Figure 17 illustrate an output ratio (i.e., thin film output/conventional output, where output is in kg of steam). The graph in Figure 17 illustrates that the output ratio is generally close to 1, indicating that the thin film structure has a steam output similar to that of the conventional structure, over a one-year run.

Figure 18 is a partially schematic end view of a conventional glasshouse structure 1800 configured in accordance with the prior art. The thin film housing structure in Figure 1 has one or more advantages compared to the glasshouse structure 1800 shown in Figure 18. For example, as shown by the bold arrows in Figure 18, the gutters 1840 are elevated compared to the location of the gutters 140 in Figure 1. The elevated position of the gutters 1840 increases the shading on the solar concentrator 115 below. This shading reduces the amount of solar energy that can be collected by the solar energy collection system. Support structure 1850, as shown by the upwardly-pointing black bold arrows, is structure that supports the glass walls and/or roof of the glasshouse housing structure. As shown in Figure 18, the support structure 1850 can shade or block the light path from the sun to the solar concentrator 115.

Figures 19A-19B are partially schematic ends views of a glasshouse structure configured in accordance with the prior art juxtaposed to the thin film housing structure configured in accordance with embodiments of the present technology, further illustrating the contrast in structural arrangements. Even though a representative thin film housing structure may have a lower fill ratio than a conventional structure, overall, the thin film house can produce energy at a lower cost. The cost of the structure itself may not be lower than the cost of a conventional structure, but as a result of the improved efficiencies and operational characteristics described above, the total cost of energy production using such a structure is expected to decrease.

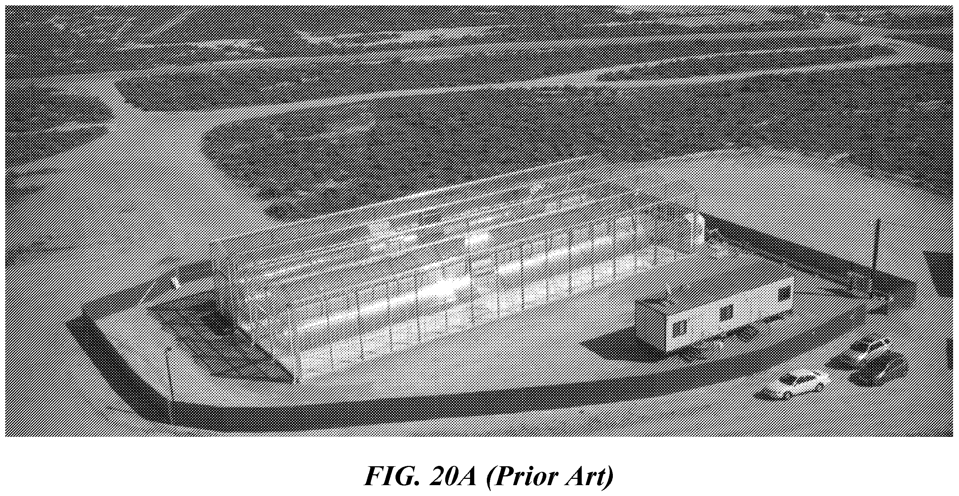

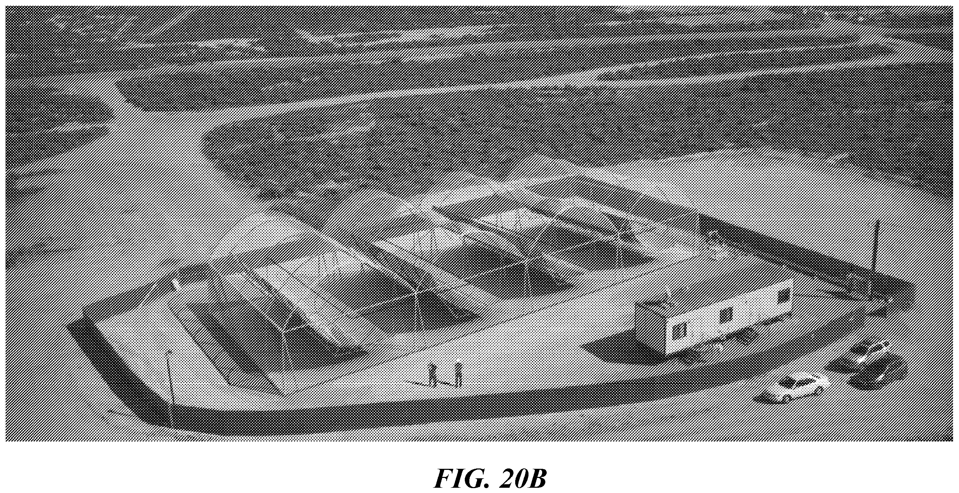

Figure 20A is a photograph of a glasshouse structure configured in accordance with the prior art and Figure 20B is a simulated photograph of a thin film housing structure configured in accordance with embodiments of the present technology. As shown in Figure 20A, the solar concentrators are positioned in an east-to-west arrangement, where the solar receivers extend in an east-west direction, and the solar concentrators face toward the equator. In contrast, Figure 20B has solar concentrators positioned in a north-to-south arrangement in which the solar concentrators face east in the morning and west in the afternoon. The solar concentrators shown in Figure 20B also have a smaller fill ratio than the fill ratio for the solar concentrators shown in Figure 20A. Determining whether to position the solar concentrators in a north-to-south arrangement or an east- to-west arrangement depends at least in part on the amount of sunlight that can be collected, which depends at least in part on the fill ratio of the solar concentrators in the housing structure. In general, a north-to-south arrangement is chosen for lower fill ratios, and an east-to-west arrangement is chosen for high fill ratios.

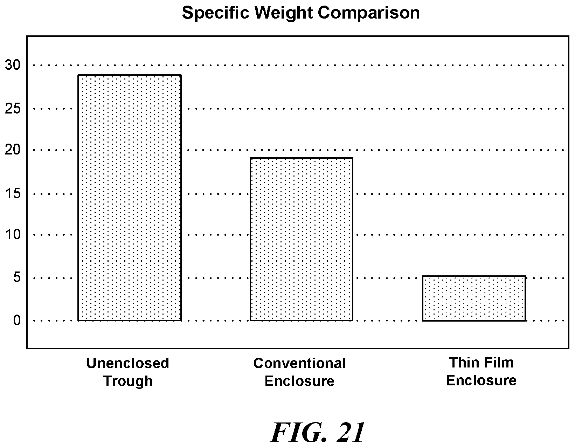

Figure 21 is a bar graph illustrating weight comparisons between (a) a trough structure (with no enclosure) in accordance with the prior art, (b) a glasshouse structure in accordance with the prior art, and (c) a thin film housing structure configured in accordance with embodiments of the present technology. Examples of unenclosed trough structures can be found at http://cordis.europa.eu/documents/documentlibrary/51762451 EN6.pdf. Examples of glass enclosed trough structures can be found in an article by B. Bierman et al. "Performance of an Enclosed Trough EOR system in South Oman," available at https://www.glasspoint.com/media/2013/11/GlassPoint-Performance-of-Enclosed-Trough-FINAL.pdf. The bar graph illustrates that the components of the unenclosed trough solar system weigh more per unit area than the components of the conventional combination of a glasshouse structure plus solar system. The components of the conventional glasshouse structure, plus solar system weigh more per unit area than the components of the thin film structure plus solar system. In particular, the bar graph illustrates that the unenclosed trough plus solar system has a total specific weight of 28 kg/m², the conventional glasshouse plus solar system has a total specific weight of approximately 19 kg/m², and the thin film structure plus solar system has a total specific weight of approximately 5.5 kg/m². The significant reduction in the weight of the overall system (structure plus solar system) can contribute to the overall reduction in cost for producing energy.

### Agricultural Applications

Several embodiments of the present technology were described above in the context of enclosures particularly configured to house a solar collection system for generating energy in the form of steam or another heated working fluid, or electricity (e.g. via photovoltaic cells). In other embodiments, the structures can be used for other purposes. For example, in particular embodiments, the structures can be used to house crops or other plants, generally in the manner of a greenhouse, but with greater efficiency than typical glass-paned greenhouses. Several attributes of structures formed using the foregoing techniques can have particular benefits for greenhouse applications. For example, the stretched thin film is expected to be more damage-tolerant than glass panes. In particular, the thin film is expected to withstand earthquakes more effectively than glass panes. Thin films are also expected to withstand hailstorms more effectively than glass panes, and are likely to be pocked or divoted, rather than shattered, during a hailstorm. It is further expected that localized pocks or divots may relax over time, causing the film to return to the smooth, anticlastic shape described above.

A further benefit of the foregoing structure for agricultural applications is that the thin film construction can be used to provide an air-tight or nearly air-tight enclosure, and, in particular, an enclosure that is more air tight than one made from glass panes. This can be particularly advantageous because in agricultural applications, growers typically wish to increase the amount of carbon dioxide within the enclosure to encourage crop growth. The ability to seal (or more effectively seal) the structure increases the ability to boost the concentration of carbon dioxide within the enclosure (e.g., with a CO₂ supply supplementing and/or adjusting CO₂ levels in the enclosure). In non-agricultural applications, the air tightness of the structure can reduce the amount of energy expended (e.g., via pumps) to pressurize the interior and keep out dust and/or other contaminants, and/or otherwise control the interior environment (e.g., temperature and/or humidity).

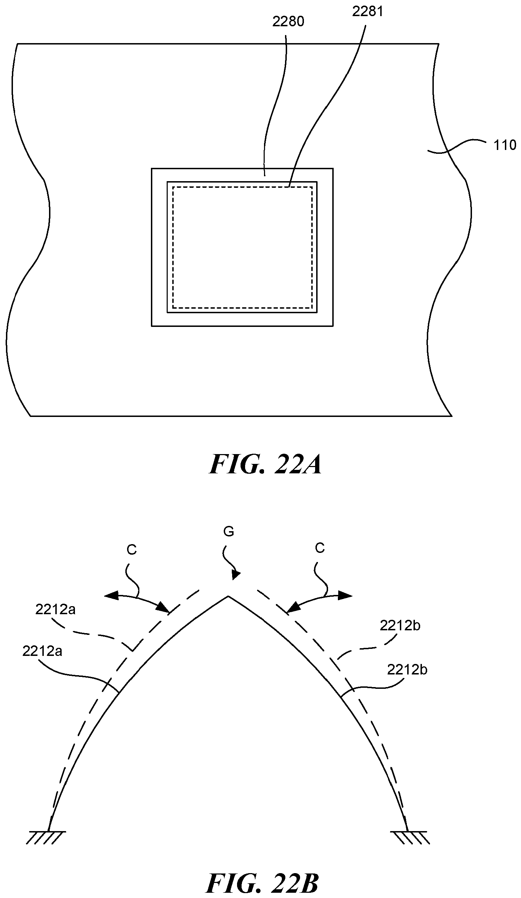

Notwithstanding the above, it may at times be desirable open or vent the enclosure when used for agricultural (and potentially other) applications. Figures 22A and 22B illustrate representative embodiments that accommodate venting. Referring first to Figure 22A, the thin film 110 can include a post-installed frame 2280 that is attached to the film after the film has been stretched and installed in any of the manners described above. Once the frame is attached, the film can be cut as indicated by dotted cut line 2281 to provide a vent. In particular embodiments, a moveable cover is attached to the frame to control the vent flow rate.

Figure 22B illustrates an embodiment in which the structure includes two curved members 2212a, 2212b which are joined at a releasable point near the peak of the structure. When in the configuration shown in solid lines in Figure 22B, the structure is air-tight or nearly air-tight. To vent the enclosure, the curved structural elements 2212a, 2212b, can be pivoted relative to each other (or one can be pivoted relative to the other) to open a gap G. The pivoting action is indicated by arrow C.

### Representative Components, Enclosures, and Manufacturing Techniques

Figures 23A-26B illustrate enclosures and associated structures and tools configured in accordance with some embodiments of the present technology. Figures 23A-23C illustrate curved support members or portions having cross-sectional shapes in accordance with representative embodiments. These support members can be formed using an extrusion process and/or other suitable process, and can include other internal features, not shown in the Figures for purposes of clarity. Referring first to Figure 23A, a first curved support member 112a includes a transverse film receiving channel 180 and a brace 181 that operate in a manner generally similar to that described above with reference to Figure 8E. As discussed above, the first curved support member 112a can be used to join two thin film panels and can have a relatively lightweight configuration because it may not be used to support other elements besides the panels. The first curved support members 112a can be attached to one or more underlying structural elements (e.g. the gutters 140 shown in Figure 1).

Figure 23B illustrates a representative second curved support member 112b having a film receiving channel 180 for receiving adjacent thin film panels, a brace 181 to provide support, and a connection channel 186 for connecting to other elements of the overall system. As shown in Figure 23B, the brace 181 can be more robust than the brace 181 shown in Figure 23A, allowing the second curved support member 112b to support other structures. In particular, the connection channel 186 can be used to connect to support members 125 (Figure 1) that support corresponding receivers 120 and concentrators 115 (Figure 1). The ends of the curved support members 112 can intersect and attach to the gutter 140. The curved support members 112 operate as fasteners to connect adjacent thin film panels with a joint that extends in a transverse direction. As discussed above, the first and second curved support members 112a, 112b can be alternated with each other in a longitudinal direction to support the thin film and the foregoing components. In some embodiments, the span between a given first curved support member 112a and its neighboring second curved support member 112b is 2.5m, and can have other values in other applications.

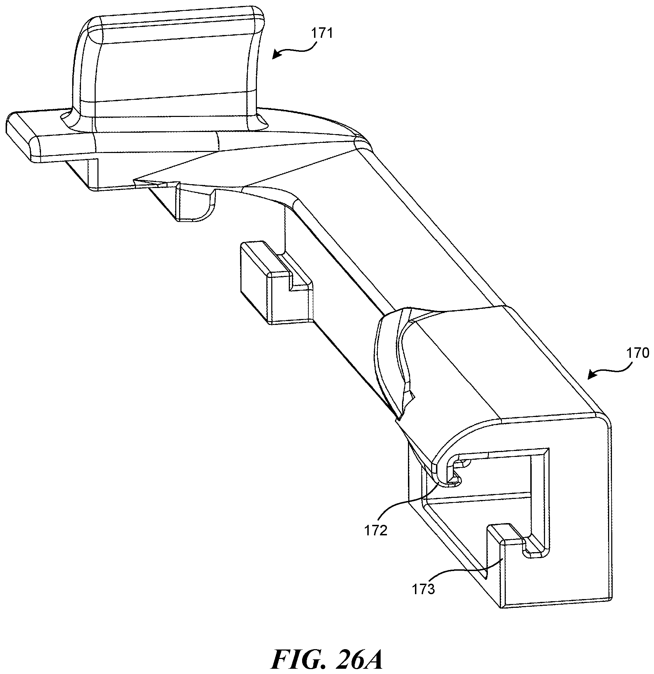

Figure 23C illustrates a representative third curved support member 112c having multiple film receiving channels 180, each configured to carry a section or panel of thin film, and a brace 181 providing support to the film receiving channels 180 and the connection channel 186. The third support member 112c can also include an inserter channel to facilitate the film installation process, as described later with reference to Figures 26A-26B. The larger and more robust third curved support member 112c can be spaced apart at greater intervals than the first and second curved support members 112a, 112b, for example, every 15 meters.

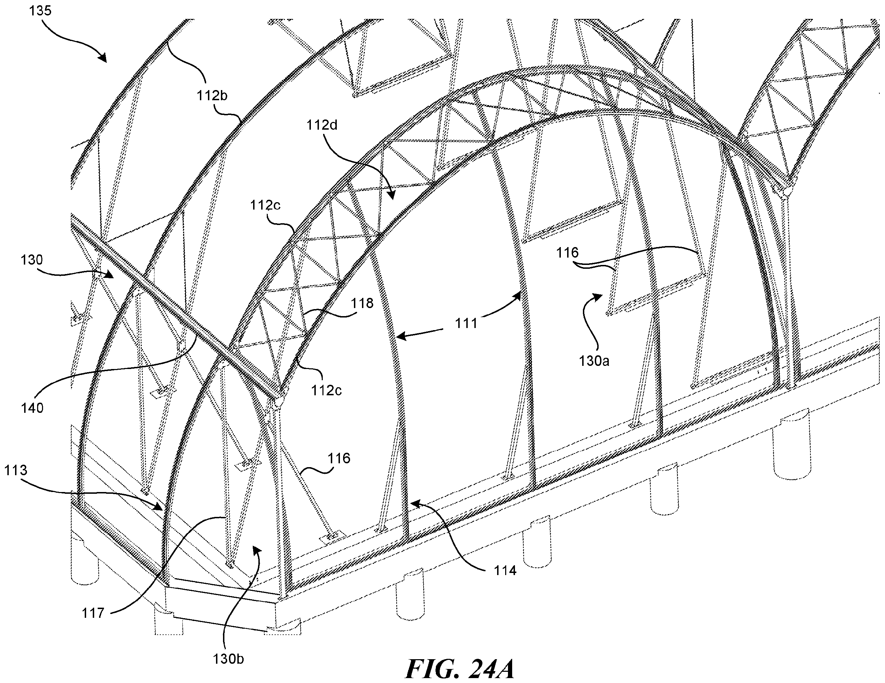

Figure 24A is a partially schematic illustration of a portion of a representative enclosure 135 configured to support thin films in position in accordance with some embodiments of the present technology. The internal support structure 111 includes multiple, spaced apart second curved support members 112b, in between which are positioned first curved support members 112a (not shown in Figure 24A). The ends of the curved support members (referred to generally as curved support members 112) can intersect and attach to the gutter 140. The curved support members 112 operate as fasteners to connect adjust thin film panels with a joint that extends in a transverse direction. At the end of the enclosure 135, the support structure 111 includes a fourth curved support member 112d that in turn includes two third curved support members 112c attached via truss members 118. The curved support members 112 and the gutter 140 are carried by uprights 130, including first uprights 130a positioned away from the exterior walls of the enclosure 135, and second uprights 130b positioned close to the exterior walls. The first uprights 130a can include two canted members 116 positioned generally in an A-frame configuration. The second uprights 130b can include a canted member 116 paired with a vertical member 117 to fit more closely to the outer wall.

At the outer walls of the enclosure 135, the support structure 111 can include curved sidewall members 113 along the sides of the enclosure 135, and curved end wall members 114 at the ends of the enclosure 135. The curved sidewall and end wall members 113, 114 can support additional panels of thin film in a curved, tensioned arrangement to provide benefits similar to those described above with reference to the overhead thin films carried by the first-fourth curved support members 112a-112d. In some embodiments, the material composition, thickness, and/or level of reinforcement for the thin film at the walls may be different than for the overhead/roof portions due to differing loads.

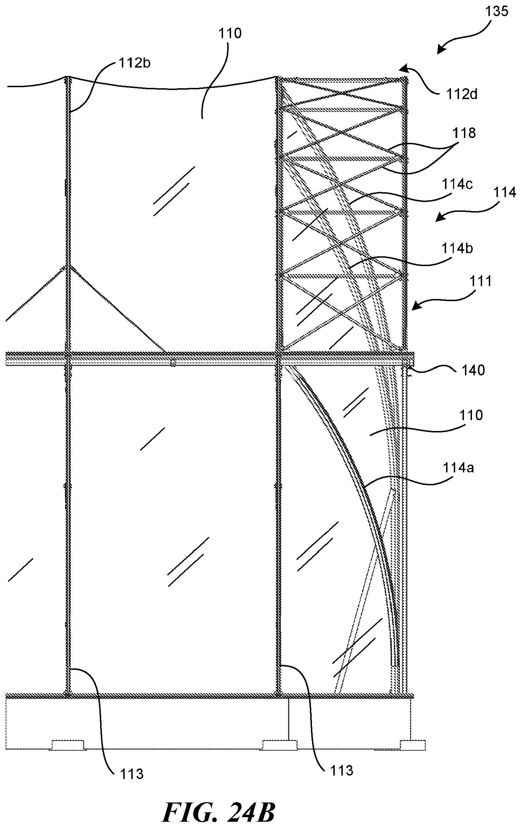

Figure 24B is a side elevation view of the enclosure 135 illustrating the end region of the enclosure 135. As shown in Figure 24B, the curved end wall members 114 can include a first curved end wall member 114a extending approximately to the gutter 140, as well as second and third curved end wall members 114b, 114c extending progressively higher within the support structure 111 in a direction extending into the plane of Figure 24B. The thin film 110 (e.g., segments or panels of the thin film 110) are positioned across neighboring curved sidewall members 113, neighboring second curved support members 112b, and neighboring curved end wall members 114a-114c. The thin film 110 positioned over the third curved end wall members 114 is located under or within the truss members 118 to define a curved end wall of the overall enclosure 135.

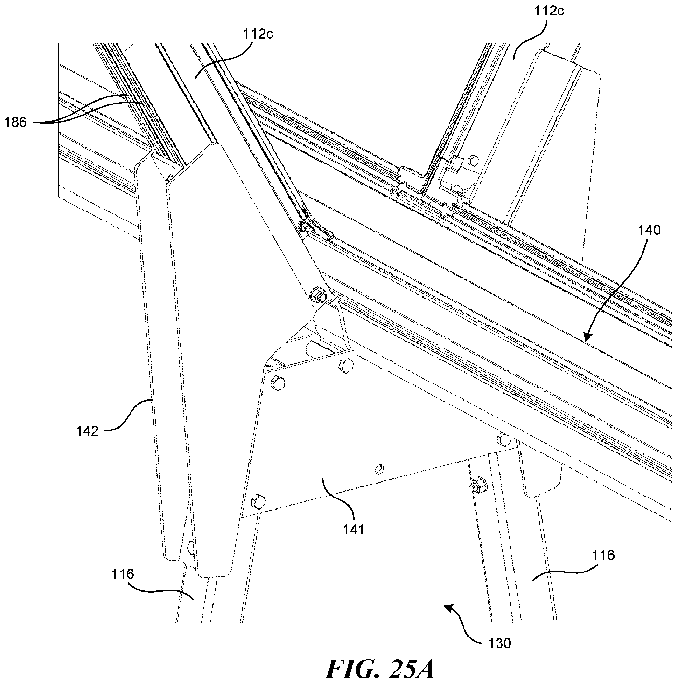

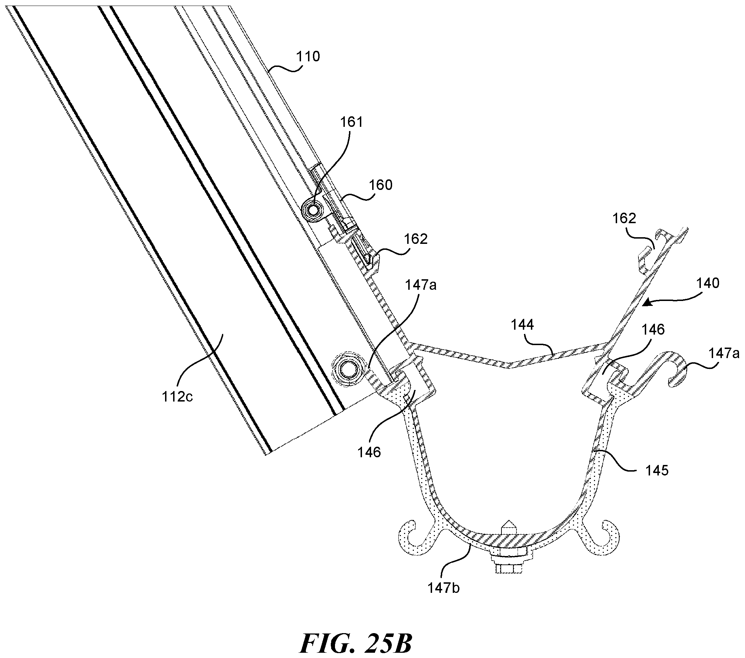

Figure 25A illustrates a representative technique for supporting curved support members in accordance with some embodiments of the present technology. For purposes of illustration, Figure 25A illustrates an arrangement for supporting third curved support members 112c, with the understanding that the same or generally smaller techniques can be used to support other curved overhead portions or members. The third curved support members 112c are supported by an upright 130 that includes two canted members 116 operatively coupled to the curved overhead portions 112c and the gutter 140 to support these elements in position. In an aspect of the illustrated embodiment, a bracket 142 is attached between the canted members 116 and the corresponding third support members 112c, e.g., using the connection channels 186 to support a bolted arrangement. A support plate 141 can carry the gutter 140, and can be secured to the gutter 140 and the third support members 112c using bolts or other arrangements, as described in further detail below with reference to Figure 25B.

Figure 25B is a partially schematic, partial cross-sectional illustration of the gutter 140 and an associated one of the third curved support members 112c. The gutter 140 can be formed from a single extrusion having an upwardly facing water flow surface 144, and a lower support beam 145 that provides structure and rigidity to the water flow surface 144 and more generally the gutter 140. The gutter 140 can further include mounting channels 146 and a longitudinal film receiving channel 162 that support the third curved support member 112c and the associated thin film 110.

In a particular arrangement, the mounting channels 146 receive upper bolt receptacles 147a and a lower bolt receptacle 147b. The upper bolt receptacles 147a are attached via a bolt to the third curved support member 112c, and the lower bolt receptacles 147b can be used to attach to upright structure or other features. The longitudinal edge channel 162 can receive a corner piece 160 that carries the thin film 110, and can be further attached to the curved support member 112c via a bolt 161.

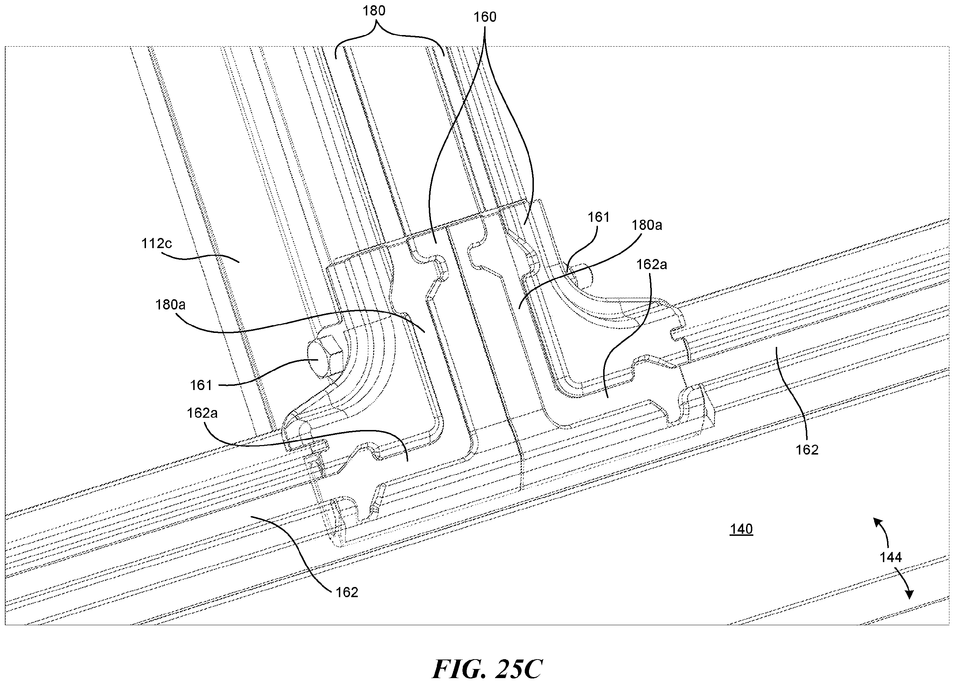

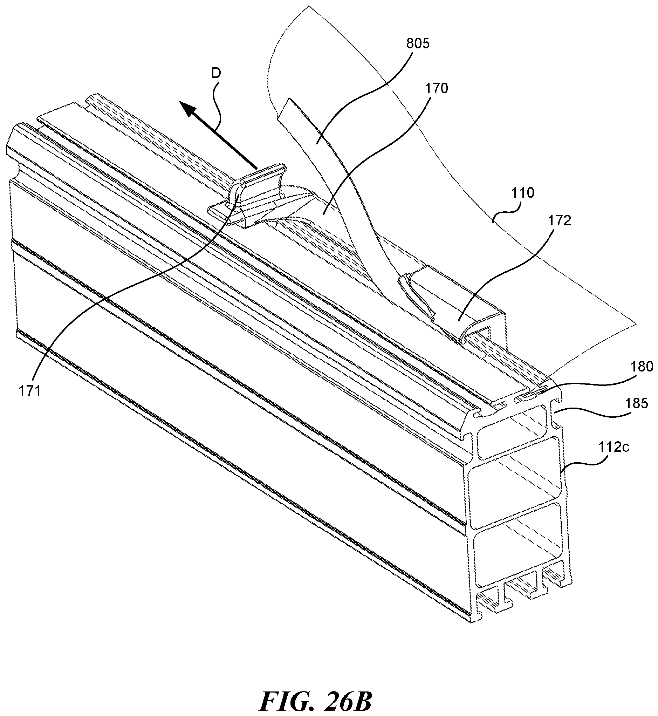

Figure 25C is a partially schematic, isometric illustration of a portion of the arrangement shown in Figure 25B. The gutter 140 includes the water flow surface 144, and the longitudinal film receiving channel 162, which faces upwardly and outwardly. Two corner pieces 160 include longitudinal channels 162a and transverse channels 180a that align with the corresponding longitudinal film receiving channels 162 of the gutter 140 and the transverse film receiving channels 180 of the third curved support member 112c. Accordingly, an operator can position the thin film (and in particular, the securing members along the edges of the thin film) in the corner pieces 160 first, then mount the corner pieces 160 to the gutter 140, and then insert the thin film along the longitudinal film receiving channels 162 and transverse film receiving channels 180. More particularly, the operator can insert a longitudinal securing member, carried by the thin film, into the longitudinal channels 162, 162a, and insert the transverse securing member into the transverse channels 180, 180a. In some embodiments, two separate corner pieces 160 are used at junctions where the third curved support member 112c is installed, and a simple "T-shaped" corner piece (corresponding to two attached corner pieces of the type shown in Figure 25C) is used where the first and/or second curved support member 112a, 112b are installed. A representative technique for conducting these insertion processes is described below with reference to Figures 26A and 26B.

Figure 26A is a partially schematic, isometric illustration of an edge insertion tool 170 that includes a handle 171, an inserter 172, and a guide 173. Figure 26B illustrates the inserter 172 as it is being used to insert a thin film 110 into the transverse film receiving channel 180 of a representative third curved support member 112c. Referring to Figures 26A and 26B together, the guide 173 of the edge insertion tool 170 (Figure 26A) is positioned in the inserter channel 185 of the third curved support member 112c. In this orientation, the inserter 172 is positioned directly over, and extends slightly into, the transverse film receiving channel 180 to force the thin film 110 and its associated securing member 805 into the film receiving channel 180. To do this, the operator slides the edge insertion tool 170 along the third curved support member 112c, as indicated by arrow D while the inserter 172 forces the edge of the thin film 110 into the film receiving channel 180.

An advantage of some embodiments that include tools such as those described above is that the tools can simplify the process for connecting thin films with an underlying framework to produce an enclosure. In some embodiments, the foregoing process can be performed manually, (though still reducing worker fatigue) and in some embodiments, the foregoing process can be automated or at least partially automated. For example, one or more robotic devices can be used to insert the thin film into the corresponding channels. In at least some embodiments, the connection channels 186 described above with reference to Figures 23A-Figure 23C can be used to facilitate operation of such robotic devices. A further advantage of using tools (whether manual or robotic) is that the tools can reduce the risk of damage (scratching and/or other damage) resulting from handling and installation.

Several of the techniques and structures described above can provide significant benefits when compared to conventional techniques. For example, when compared to glass, embodiments of the present thin film technology can be used to produce enclosures that are more resistant to earthquakes, more resistant to hail storms, lighter weight, and/or more airtight. When compared to conventional polyethylene films, ETFE films can last for a significantly longer period of time, and, when treated in accordance with the foregoing locking and unlocking techniques, can reduce the likelihood for flutter and/or other aerodynamically-induced deformations. By shrinking the thin film over a structural frame (e.g., the curved support elements), embodiments of the present technology can synergistically contribute to the overall strength of the structure, rather than requiring additional structure for support. Accordingly, while the treated ETFE films described above may have an initially higher cost, over the course of time the cost of the structure can be significantly reduced, e.g., due to the reduced use of metal components for installation, and/or the longevity and/or damage tolerance of the thin film. Still further, it is expected that the transmissibility of the ETFE film will be significantly better (e.g., at least 5% better) than either glass or polyethylene. At the same time, the durability of the treated ETFE film can be close to that of glass.

Several of the techniques described above can produce further advantages. For example, in some conventional techniques, thin film panels are welded to each other rather than fastened with mechanical fasteners. Other conventional techniques include clamping techniques (which can result in an inconsistent stretch of a thin film panel) and/or screws (which place holes in the thin film panels and can provide sources of failure). It is expected that in many applications, the use of mechanical fasteners having characteristics in accordance with the presently disclosed technology may be less expensive and/or more efficient than a welded construction, and more structurally sound than existing mechanical fasteners. For example, by wrapping the thin film around the securing member (e.g., as described above with reference Figures 8F-8I) the likelihood for a larger failure caused by an imperfect weld or hole can be reduced or eliminated. Instead, the tension can be uniformly distributed via a simple system that is less subject to such point failures.

Another feature of at least some of the foregoing arrangements is that the thin film panels do not merely rest on the underlying support structure, but are secured to the underlying structure. For example, the thin film panels can be secured along the entire transverse dimension, from one gutter to the opposite gutter, in a continuous arc, and/or along the entire longitudinal dimension from one curved support member to the next. In other arrangements, at least a majority of the lengths of the thin films are secured to the underlying support structure. In any of these arrangements, the fact that the thin films are more positively or securely connected to the underlying structure can reduce the tendency for the films to flutter in high winds and/or undergo fatigue, damage or other detrimental effects.

Still another feature of some embodiments is that the processes for manufacturing components of the enclosure and erecting the enclosure can be further simplified. For example, the edge pieces described above can be placed on the thin film panels before the panels are elevated above the enclosure floor, reducing the amount of work to be done at the elevated height. The films can be placed over the curved support elements and attached on the ground, stacked like and accordion, and then elevated, spread out, and attached to the uprights and/or other elements of the support structure. This, too, can reduce the amount of installation work that is performed at elevated heights above the floor.

The edge treatments can be varied depending upon the application. In some embodiments, a securing member (e.g., a strip) is placed along all four edges, and in some embodiments, only along two opposing edges. Whether along two or four edges, the panels can be rolled (loosely or tightly) to facilitate transporting the film to the location of the enclosure. For example, the strips may be quite thin (e.g., one millimeter thick or less) and flexible, so as to allow for rolling. That said, the strips can still provide the stiffness and bulk that improves the ability of the fasteners to retain them. In some embodiments, the strips can be formed from multiple or mixed materials. For example, if the film is stretched only uniaxially, the strip material can be selected to match the mechanical characteristics of the film (e.g., ETFE) in that direction, typically along the longitudinal axis of the enclosure (or in a direction from one curved support element to the next). The mechanical characteristics of the strip in the perpendicular direction will not be as significant in such a case, and can therefore increase the options for suitable materials, and/or reduce costs.

From the foregoing, it will be appreciated that specific embodiments of the present technology have been described herein for purposes of illustration, but that various modifications may be made without deviating from the technology. For example, PV cells can be positioned inside the housing structure in addition to or in lieu of conduit-type receivers. Particular embodiments of the present technology were described above in the context of solar concentrators with linear concentrating mirrors. In other embodiments, the solar concentrators can include linear Fresnel concentrators, concentrator towers, and/or dish concentrators, among others. In at least some embodiments the lower portions of the structure can be made of a material other than the thin film. In a particular example, in which the structure is used in a desert or other sandy, windy environment, the lower portions can be made from a more robust material that is more resistant to abrasion and/or other particle impact, which typically results at elevations of a few feet off the ground.

In particular embodiments, after the thin film is "locked," the tension is removed from the thin film before it is shipped to an installation site. In other embodiments, for example, for which the film may be exposed to elevated temperatures and/or long time periods while locked, the thin film can remain under tension until it reaches the installation site. In still further embodiments, the process of locking and unlocking the thin film can be performed at the installation site. Which process is chosen can depend upon several factors, including the likelihood of encountering a temperature sufficient to prematurely unlock the film prior to installation, and/or the availability of an elevated temperature environment at the installation site. For example, if the film is shipped and used in a cool or temperate climate, the locking temperature may be selected to be lower than if it is shipped and used in a high temperature climate. In still further embodiments, locking may be selected (or not selected) for a preconditioning process depending on how much stretch is put in the film, how much spring-back is acceptable, and/or the temperature during the stretching process. In some embodiments, locking and stretching may be performed in a single step.

In any of the foregoing embodiments, the thin film can represent an engineered structure, as opposed to merely a material cut from a roll. Accordingly, the film can be cut to precise dimensions, provided with edging materials, stretched to specific dimensions under specific conditions (e.g., temperature and time), and installed and heated for shrinkage, all in a manner that allows proper tracking of the changes made to the film.

Particular embodiments of thin film structures were discussed above in the context of collecting solar energy for energy conversion (e.g., to electricity and/or steam) and/or agricultural purposes (which can be considered as another specific form of energy conversion). In other embodiments, the collected solar energy can be used for other purposes, including dehydration and/or desalination. In still further embodiments, thin film structures having any one or combination of the characteristics described above can be used for applications other than collecting solar energy. For example, such structures can be used for stadiums and/or other large architectural structures.

Several of the embodiments described above identify representative temperature and time profiles suitable for locking and unlocking ETFE films. The profiles (and/or other process variables) may differ for other materials. The amount of stretch introduced into a material at a given point in its processing may depend on prior processing steps, including, for example, whether the film retains any stretch from prior process steps. The following examples provide additional embodiments of the present technology.

A representative system for collecting solar energy includes an enclosure having an interior region and further having a support structure that includes a plurality of curved portions, and a flexible, thin film carried by, and fixed relative to, the curved portions. The thin film is positioned to transmit solar radiation into the interior region. The system includes a receiver positioned in the interior region, and carrying a working fluid. A solar concentrator can be positioned in the interior region to direct the solar radiation to the receiver to heat the working fluid. A controller can be operatively coupled to the solar concentrator and configured to adjust a position of the solar concentrator based at least in part on a position of the sun.

In a further representative example, the plurality of curved portions include a plurality of first curved portions having a first stiffness and connecting adjacent thin film panels, a plurality of second curved portions having a second stiffness greater than the first stiffness and being interspersed between the first curved portions and connecting adjacent thin film panels. The receiver is suspended from the second curved portions. The system can further include a plurality of third curved portions having a third stiffness greater than the second stiffness and connecting adjacent thin film panels. Individual thin film panels can have a longitudinal edge with a longitudinal securing member attached along the longitudinal edge, and a transverse edge with a transverse securing member attached along the transverse edge. Individual curved portions can include at least one transverse film receiving channel in which the transverse securing members from adjacent thin film panels are received, and the system can further include a gutter attached to the plurality of curved portions. The gutter can have a longitudinal film receiving channel in which the longitudinal securing members from adjacent thin film panels are received.

In still further examples, an individual curved portion is elongated in a transverse direction, and has a length in the transverse direction, with the thin film fixed to the curved portion along the entirety of, or at least a majority of, the length. The thin film has an anticlastic shape, with multiple adjacent portions mechanically connected to each other with a fastener. In installations that include a gutter extending between curved portions, the gutter can be positioned below at least a portion of the solar concentrator, e.g., to reduce or avoid shielding the concentrator.

A representative method for assembling an enclosure can include erecting a support structure that includes a plurality of curved portions, fixing a flexible, thin film relative to the curved portions, with the thin film being positioned to transmit solar radiation into an interior region of the enclosure. The method further includes positioning a receiver in the interior region, and positioning a solar concentrator in the interior region to direct the solar radiation to the receiver and heat a working fluid in the receiver.

In further examples, the method can include, before fixing the thin film to the curved portions, (a) tensioning the thin film to produce a stretch in the thin film, and (b) releasing tension in the thin film, with at least a portion of the stretch preserved after release. The method can further include, after fixing the thin film to the curved portions, treating the thin film to increase tension in the thin film. For example, treating the thin film can include heating the thin film. Heat can be used in other contexts as well. For example, the method can include heating the thin film after stretching the thin film and before releasing tension in the thin film to preserve the portion of the stretch. The preserved portion of the stretch can be further preserved by controlling a temperature of the thin film to be below a threshold temperature.

In another example, fixing the thin film can include fixing the thin film while the thin film is slack between at least two curved portions, and the method can further include at least partially re-tensioning the thin film after fixing the thin film to the at least two curved portions. At least partially re-tensioning can include shrinking the film in a direction normal to at least one of the two curved portions, e.g., by applying heat.

As used herein, the term "about" refers to the specific value, plus or minus 10%, unless specified otherwise.

## Claims

1. A system for collecting solar energy, comprising:
an enclosure (135) having an interior region, the enclosure (135) further having:
a support structure (111) that includes a plurality of curved portions (112); and
a flexible film (110) carried by and fixed relative to the curved portions (112), the film (110) having an anticlastic shape between neighboring curved portions (112) and positioned to transmit solar radiation into the interior region;
a receiver (120) positioned in the interior region, the receiver (120) carrying a working fluid and suspended from the curved portions (112);
a solar concentrator (115) positioned in the interior region to direct the solar radiation to the receiver (120) to heat the working fluid.

2. The system of claim 1, further comprising
a controller operatively coupled to the solar concentrator (115) and configured to adjust a position of the solar concentrator (115) based at least in part on a position of the sun.

3. The system of claim 1 or 2 wherein:
the plurality of curved portions (112) include:
a plurality of first curved portions (112) having a first stiffness and connecting adjacent film panels;
a plurality of second curved portions (112) having a second stiffness greater than the first stiffness, the second curved portions (112) being interspersed between the first curved portions (112) and connecting adjacent film panels, with the receiver (120) suspended from the second curved portions (112); and
optionally, a plurality of third curved portions (112) having a third stiffness greater than the second stiffness and connecting adjacent film panels;
and/or wherein:
individual film panels have a longitudinal edge with a longitudinal securing member attached along the longitudinal edge, and a transverse edge with a transverse securing member attached along the transverse edge; and
individual curved portions (112) include at least one transverse film receiving channel (180) in which the transverse securing members from adjacent film panels are received.

4. The system of claim 3, further comprising a corner piece (160) in which an edge of a longitudinal securing member and an edge of a transverse securing member of an individual film panel are received, the corner piece (160) being attached to a gutter (140) and a corresponding one of the curved members.

5. The system of any of claims 2 to 4, wherein the receiver (120) is suspended from the curved portions (112); and/or
wherein the solar concentrator (115) is suspended from the receiver (120); and/or
wherein an individual curved portion is elongated in a transverse direction, and has a length in the transverse direction, and wherein the film (110) is fixed to the curved portion along a majority or entirety of the length.

6. The system of any preceding claim, wherein the film (110):
includes a first region having a first film strength and a second region having a second film strength different than the first film strength; and/or
includes a first region having a first heat resistance and a second region having a second heat resistance different than the first heat resistance; and/or
includes a reinforcing fiber (505), preferably composed of a transparent material; or includes no reinforcing fiber (505); and/or
includes multiple portions that are bonded together to form the anticlastic shape, and wherein at least two of the portions have different sizes; or
is preconditioned; and/or
is at least partially fluorinated; and/or
includes ETFE; and/or
is tensioned between multiple curved portions (112); and/or
has a thickness between 50 and 250 µm.

7. The system of any of claims 1 to 5, wherein the film (110) includes multiple adjacent portions that are mechanically connected to each other with a fastener.

8. The system of any of claims 2 to 6, wherein the receiver (120) extends along a receiver (120) axis, and wherein the adjacent portions are positioned along the receiver (120) axis, and wherein joints between the adjacent portions extend along a joint axis transverse to the receiver (120) axis and/or
wherein multiple solar concentrators (115) are spaced in a fill ratio in a range from 65% to 75%; and/or
wherein the solar concentrators (115) are parabolic mirrors.

9. The system of claim 7, further comprising:
a first elongated securing member attached to the edge of a first adjacent portion; and
a second elongated securing member attached to the edge of second adjacent portion, and wherein the first and second elongated securing members are received in the elongated receiving channel (880); and/or
wherein the fastener is elongated and includes an elongated receiving channel (880), and wherein edges of the adjacent portions are received in the elongated receiving channel (880); or wherein the fastener includes an elongated, curved brace positioned adjacent to the elongated receiving channel (880) to stiffen the elongated receiving channel (880).

10. The system of claim 1, further comprising a gutter (140) extending between curved portions (112), or
further comprising a gutter (140) extending between curved portions (112) and:
the gutter (140) is attached to and supports the curved portions (112); and/or
the gutter (140) is positioned below at least a portion of the solar concentrator (115), at least one position of the solar concentrator (115); and/or
at least a portion of the solar concentrator (115) is positioned above the gutter (140) when the solar concentrator (115) is in at least one of multiple positions directed by a controller; and/or
the gutter (140) is attached to the plurality of curved portions (112) and has a longitudinal receiving channel (162) in which the longitudinal securing members from adjacent film panels are received.

11. The system of any preceding claim:
wherein an individual curved portion (112) includes an elongated receiving channel (880), and wherein an edge of the film (110) is received in the elongated receiving channel (880); and/or
wherein neighboring curved portions (112) are spaced at least 2.5 meters apart; and/or
wherein the support structure (111) includes a plurality of upright portions (130), with individual upright portions (130) supporting corresponding individual curved portions (112), and wherein a reference plane is defined by intersections between upright portions (130) and curved portions (112), and wherein the solar concentrator (115) is positioned to intersect the reference plane, at least one position of the solar concentrator (115); and/or
wherein the at least one of the upright portions (130) has an A-frame configuration.

12. A method for assembling an enclosure (135) for collecting solar energy, comprising:
erecting a support structure (111) that includes a plurality of curved portions (112);
fixing a flexible film (110) relative to the curved portions (112), the film (110) being positioned to transmit solar radiation into an interior region of the enclosure (135),
the film (110) forming an anticlastic shape between neighboring curved portions (112), and
before fixing the film (110) to the curved portions (112):
tensioning the film (110) to produce a stretch in the film (110);
releasing tension in the film (110), with at least a portion of the stretch preserved after release; and/or
after fixing the film (110) to the curved portions (112):
treating the film (110) to increase tension in the film (110),
positioning a receiver (120) in the interior region; and
positioning a solar concentrator (115) in the interior region to direct the solar radiation to the receiver (120) and heat a working fluid in the receiver (120).

13. The method of claim 12, wherein treating the film (110) includes heating the film (110); and/or
further comprising heating the film (110) after stretching the film (110) and before releasing tension in the film (110) to preserve the at least a portion of the stretch, preferably further preserving the at least a portion of the stretch by controlling a temperature of the film (110) to be below a threshold temperature; and/or
wherein the film (110) has first and second opposing edges, and third and fourth opposing edges, and wherein tensioning the film (110) includes tensioning the film (110) in a direction normal to the first and second edges, preferably comprising not stretching the film (110) in a direction normal to the third and fourth edges; and/or producing a stretch of different amounts at different positions along at least one of the first or second edges.

14. The method of any of claims 12 to 13, wherein fixing the film (110) includes fixing the film (110) while the film (110) is slack between at least two curved portions (112), and wherein the method further comprises at least partially re-tensioning the film (110) after fixing the film (110) to the at least two curved portions (112), preferably wherein at least partially re-tensioning includes shrinking the film (110) in a direction normal to at least one of the at least two curved portions (112).

15. The method of any of claims 12 to 14, wherein:
the film (110) forms a curved, upwardly-facing surface; and/or
wherein the film (110) forms a curved, outwardly-facing surface; and/or
erecting the support structure (111) includes:
erecting an upright element; and
supporting at least one of the curved portions (112) with the upright element by coupling the upright element to the at least one curved portion (112); and/or
erecting a first curved portion (112) at a first position, the first curved portion (112) having a first stiffness; and
erecting a second curved portion (112) at a second position different than the first position, the second curved portion (112) having a second stiffness different than the first stiffness, preferably further comprising alternating first and second curved portions (112) in a direction aligned with a longitudinal axis of the receiver (120).

## Patentansprüche

1. System zum Sammeln von Solarenergie, umfassend:
ein Gehäuse (135), das einen Innenbereich aufweist, wobei das Gehäuse (135) ferner aufweist:
eine Stützstruktur (111), die eine Vielzahl von gekrümmten Abschnitten (112) einschließt; und
einen flexiblen Film (110), der durch die gekrümmten Abschnitte (112) getragen wird und relativ zu diesen fixiert ist, wobei der Film (110) zwischen benachbarten gekrümmten Abschnitten (112) eine antiklastische Form aufweist und positioniert ist, um Solarstrahlung in den Innenbereich zu übertragen;
einen Empfänger (120), der in dem Innenbereich positioniert ist, wobei der Empfänger (120) ein Arbeitsfluid trägt und an den gekrümmten Abschnitten (112) aufgehängt ist;
einen Solarkonzentrator (115), der in dem Innenbereich positioniert ist, um die Solarstrahlung zu dem Empfänger (120) zu leiten, um das Arbeitsfluid zu erhitzen.

2. System nach Anspruch 1, ferner umfassend
eine Steuervorrichtung, die mit dem Solarkonzentrator (115) wirkgekoppelt und konfiguriert ist, um eine Position des Solarkonzentrators (115) basierend mindestens teilweise auf einer Position der Sonne anzupassen.

3. System nach Anspruch 1 oder 2, wobei:
die Vielzahl von gekrümmten Abschnitten (112) einschließt:
eine Vielzahl von ersten gekrümmten Abschnitten (112), die eine erste Steifigkeit aufweist und angrenzende Filmplatten verbindet;
eine Vielzahl von zweiten gekrümmten Abschnitten (112), die eine zweite Steifigkeit aufweist, die größer als die erste Steifigkeit ist, wobei die zweiten gekrümmten Abschnitte (112) zwischen den ersten gekrümmten Abschnitten (112) eingefügt sind und angrenzende Filmplatten verbinden, wobei der Empfänger (120) an den zweiten gekrümmten Abschnitten (112) aufgehängt ist; und
optional, eine Vielzahl von dritten gekrümmten Abschnitten (112), die eine dritte Steifigkeit aufweist, die größer als die zweite Steifigkeit ist, und die angrenzende Filmplatten verbindet;
und/oder, wobei:
einzelne Filmplatten eine Längskante mit einem Längssicherungselement, das entlang der Längskante angebracht ist, und eine Querkante mit einem Quersicherungselement aufweisen, das entlang der Querkante angebracht ist; und
einzelne gekrümmte Abschnitte (112) mindestens einen Querfilmaufnahmekanal (180) einschließen, in dem die Quersicherungselemente von angrenzenden Filmplatten aufgenommen werden.

4. System nach Anspruch 3, ferner umfassend ein Eckstück (160), in dem eine Kante eines Längssicherungselements und eine Kante eines Quersicherungselements einer einzelnen Filmplatte aufgenommen sind, wobei das Eckstück (160) an einer Rinne (140) und einem entsprechenden der gekrümmten Elemente angebracht ist.

5. System nach einem der Ansprüche 2 bis 4, wobei der Empfänger (120) an den gekrümmten Abschnitten (112) aufgehängt ist; und/oder
wobei der Solarkonzentrator (115) an dem Empfänger (120) aufgehängt ist; und/oder
wobei ein einzelner gekrümmter Abschnitt in einer Querrichtung verlängert ist und eine Länge in der Querrichtung aufweist, und wobei der Film (110) entlang eines Großteils oder einer Gesamtheit der Länge an dem gekrümmten Abschnitt fixiert ist.

6. System nach einem der vorstehenden Ansprüche, wobei der Film (110):
einen ersten Bereich, der eine erste Filmstärke aufweist, und einen zweiten Bereich einschließt, der eine zweite Filmstärke aufweist, die sich von der ersten Filmstärke unterscheidet; und/oder
einen ersten Bereich, der eine erste Wärmebeständigkeit aufweist, und einen zweiten Bereich einschließt, der eine zweite Wärmebeständigkeit aufweist, die sich von der ersten Wärmebeständigkeit unterscheidet; und/oder
eine Verstärkungsfaser (505) einschließt, die vorzugsweise aus einem transparenten Material besteht; oder keine Verstärkungsfasern (505) einschließt; und/oder
mehrere Abschnitte einschließt, die miteinander gebunden sind, um die antiklastische Form auszubilden, und wobei mindestens zwei der Abschnitte unterschiedliche Größen aufweisen; oder
vorkonditioniert ist; und/oder
mindestens teilweise fluoriert ist; und/oder
ETFE einschließt; und/oder
zwischen mehreren gekrümmten Abschnitten (112) gespannt ist; und/oder
eine Dicke zwischen 50 und 250 µm aufweist.

7. System nach einem der Ansprüche 1 bis 5, wobei der Film (110) mehrere angrenzende Abschnitte einschließt, die mit einem Befestigungsmittel mechanisch miteinander verbunden sind.

8. System nach einem der Ansprüche 2 bis 6, wobei sich der Empfänger (120) entlang einer Empfänger(120)-Achse erstreckt und wobei die angrenzenden Abschnitte entlang der Empfänger(120)-Achse positioniert sind, und wobei sich Gelenke zwischen den angrenzenden Abschnitten entlang einer Gelenkachse erstrecken, die quer zu der Empfänger(120)-Achse verläuft, und/oder
wobei mehrere Solarkonzentratoren (115) in einem Füllverhältnis in einem Bereich von 65 % bis 75 % beabstandet sind; und/oder
wobei die Solarkonzentratoren (115) Parabolspiegel sind.

9. System nach Anspruch 7, ferner umfassend:
ein erstes längliches Sicherungselement, das an der Kante eines ersten angrenzenden Abschnitts angebracht ist; und
ein zweites längliches Sicherungselement, das an der Kante eines zweiten angrenzenden Abschnitts angebracht ist, und wobei das erste und das zweite längliche Sicherungselement in dem länglichen Aufnahmekanal (880) aufgenommen werden; und/oder
wobei das Befestigungsmittel länglich ist und einen länglichen Aufnahmekanal (880) einschließt, und wobei Kanten der angrenzenden Abschnitte in dem länglichen Aufnahmekanal (880) aufgenommen werden; oder wobei das Befestigungsmittel eine längliche, gekrümmte Strebe einschließt, die angrenzend an den länglichen Aufnahmekanal (880) positioniert ist, um den länglichen Aufnahmekanal (880) zu versteifen.

10. System nach Anspruch 1, ferner umfassend eine Rinne (140), die sich zwischen gekrümmten Abschnitten (112) erstreckt, oder
ferner umfassend eine Rinne (140), die sich zwischen gekrümmten Abschnitten (112) erstreckt, und:
die Rinne (140) an den gekrümmten Abschnitten (112) angebracht ist und diese stützt; und/oder
die Rinne (140) unterhalb von mindestens einem Abschnitt des Solarkonzentrators (115), von mindestens einer Position des Solarkonzentrators (115), positioniert ist; und/oder
mindestens ein Abschnitt des Solarkonzentrators (115) über der Rinne (140) positioniert ist, wenn sich der Solarkonzentrator (115) in mindestens einer von mehreren Positionen befindet, die durch eine Steuervorrichtung geführt werden; und/oder
die Rinne (140) an der Vielzahl von gekrümmten Abschnitten (112) angebracht ist und einen Längsaufnahmekanal (162) aufweist, in dem die Längssicherungselemente von angrenzenden Filmplatten aufgenommen werden.

11. System nach einem der vorstehenden Ansprüche:
wobei ein einzelner gekrümmter Abschnitt (112) einen länglichen Aufnahmekanal (880) einschließt und wobei eine Kante des Films (110) in dem länglichen Aufnahmekanal (880) aufgenommen ist; und/oder
wobei benachbarte gekrümmte Abschnitte (112) mindestens 2,5 Meter voneinander beabstandet sind; und/oder
wobei die Stützstruktur (111) eine Vielzahl von aufrechten Abschnitten (130) einschließt, wobei einzelne aufrechte Abschnitte (130) entsprechende einzelne gekrümmte Abschnitte (112) stützen, und wobei eine Referenzebene durch Schnittpunkte zwischen aufrechten Abschnitten (130) und gekrümmten Abschnitten (112) definiert ist, und wobei der Solarkonzentrator (115) positioniert ist, um die Referenzebene, mindestens eine Position des Solarkonzentrators (115), zu schneiden; und/oder
wobei mindestens einer der aufrechten Abschnitte (130) eine A-Rahmenkonfiguration aufweist.

12. Verfahren zum Zusammenbauen eines Gehäuses (135) zum Sammeln von Solarenergie, umfassend:
Aufstellen einer Stützstruktur (111), die eine Vielzahl von gekrümmten Abschnitten (112) einschließt;
Fixieren eines flexiblen Films (110) relativ zu den gekrümmten Abschnitten (112), wobei der Film (110) positioniert ist, um Solarstrahlung in einen Innenbereich des Gehäuses (135) zu übertragen,
wobei der Film (110) zwischen benachbarten gekrümmten Abschnitten (112) eine antiklastische Form ausbildet, und
vor dem Fixieren des Films (110) an den gekrümmten Abschnitten (112):
Spannen des Films (110), um eine Dehnung in dem Film (110) zu produzieren;
Lösen einer Spannung in dem Film (110), wobei mindestens ein Abschnitt der Dehnung nach dem Lösen bewahrt wird; und/oder
nach dem Fixieren des Films (110) an den gekrümmten Abschnitten (112):
Behandeln des Films (110), um die Spannung in dem Film (110) zu erhöhen,
Positionieren eines Empfängers (120) in dem Innenbereich; und
Positionieren eines Solarkonzentrators (115) in dem Innenbereich, um die Solarstrahlung auf den Empfänger (120) zu lenken und ein Arbeitsfluid in dem Empfänger (120) zu erhitzen.

13. Verfahren nach Anspruch 12, wobei das Behandeln des Films (110) das Erhitzen des Films (110) einschließt; und/oder
ferner umfassend das Erhitzen des Films (110) nach dem Dehnen des Films (110) und vor dem Lösen der Spannung in dem Film (110), um mindestens einen Abschnitt der Dehnung zu bewahren, wobei vorzugsweise ferner mindestens ein Abschnitt der Dehnung durch Steuern einer Temperatur des Films (110) bewahrt wird, um unter einer Schwellentemperatur zu liegen; und/oder
wobei der Film (110) eine erste und eine zweite gegenüberliegende Kante und eine dritte und eine vierte gegenüberliegende Kante aufweist, und wobei das Spannen des Films (110) das Spannen des Films (110) in einer Richtung normal zu der ersten und der zweiten Kante einschließt, vorzugsweise umfassend ein Nichtdehnen des Films (110) in einer Richtung normal zu der dritten und der vierten Kante; und/oder Produzieren einer Dehnung unterschiedlicher Stärke an unterschiedlichen Positionen entlang mindestens einer der ersten oder der zweiten Kante.

14. Verfahren nach einem der Ansprüche 12 bis 13, wobei das Fixieren des Films (110) das Fixieren des Films (110) einschließt, während der Film (110) zwischen mindestens zwei gekrümmten Abschnitten (112) locker ist, und wobei das Verfahren ferner ein mindestens teilweises Nachspannen des Films (110) nach dem Fixieren des Films (110) an den mindestens zwei gekrümmten Abschnitten (112) umfasst, vorzugsweise wobei das mindestens teilweise Nachspannen ein Schrumpfen des Films (110) in einer Richtung einschließt, die normal zu mindestens einem der mindestens zwei gekrümmten Abschnitte (112) ist.

15. Verfahren nach einem der Ansprüche 12 bis 14, wobei:
der Film (110) eine gekrümmte, nach oben weisende Oberfläche ausbildet; und/oder
wobei der Film (110) eine gekrümmte, nach außen gerichtete Oberfläche ausbildet; und/oder
das Aufstellen der Stützstruktur (111) einschließt:
Aufstellen eines aufrechten Elements; und
Stützen von mindestens einem der gekrümmten Abschnitte (112) mit dem aufrechten Element durch Koppeln des aufrechten Elements mit dem mindestens einen gekrümmten Abschnitt (112); und/oder
Aufstellen eines ersten gekrümmten Abschnitts (112) an einer ersten Position, wobei der erste gekrümmte Abschnitt (112) eine erste Steifigkeit aufweist; und
Aufstellen eines zweiten gekrümmten Abschnitts (112) an einer zweiten Position, die sich von der ersten Position unterscheidet, wobei der zweite gekrümmte Abschnitt (112) eine zweite Steifigkeit aufweist, die sich von der ersten Steifigkeit unterscheidet, vorzugsweise ferner umfassend abwechselnde erste und zweite gekrümmte Abschnitte (112) in einer Richtung, die mit einer Längsachse des Empfängers (120) ausgerichtet ist.

## Revendications

1. Système destiné à collecter énergie solaire, comprenant :
une enceinte (135) ayant une zone intérieure, l'enceinte (135) ayant en outre :
une structure de support (111) qui comporte une pluralité de parties incurvées (112) ; et
un film souple (110) transporté par les parties incurvées (112) et fixé par rapport à celles-ci, le film (110) ayant une forme anticlastique entre des parties incurvées voisines (112) et étant positionné de manière à transmettre le rayonnement solaire dans la zone intérieure ;
un récepteur (120) positionné dans la zone intérieure, le récepteur (120) transportant un fluide de travail et étant suspendu aux parties incurvées (112) ;
un concentrateur solaire (115) positionné dans la zone intérieure pour diriger le rayonnement solaire vers le récepteur (120) de manière à chauffer le fluide de travail.

2. Système selon la revendication 1, comprenant en outre
un contrôleur accouplé fonctionnellement au concentrateur solaire (115) et conçu pour ajuster une position du concentrateur solaire (115) en fonction, au moins en partie, d'une position du soleil.

3. Système selon la revendication 1 ou 2 dans lequel :
la pluralité de parties incurvées (112) comportent :
une pluralité de premières parties incurvées (112) ayant une première rigidité et reliant des panneaux de film adjacents ;
une pluralité de deuxièmes parties incurvées (112) ayant une deuxième rigidité supérieure à la première rigidité, les deuxièmes parties incurvées (112) étant intercalées entre les premières parties incurvées (112) et reliant des panneaux de film adjacents, le récepteur (120) étant suspendu aux deuxièmes parties incurvées (112) ; et
éventuellement, une pluralité de troisièmes parties incurvées (112) ayant une troisième rigidité supérieure à la deuxième rigidité et reliant des panneaux de film adjacents ;
et/ou dans lequel :
des panneaux de film individuels ont un bord longitudinal avec un élément de serrage longitudinal attaché le long du bord longitudinal, et un bord transversal avec un élément de serrage transversal attaché le long du bord transversal ; et
des parties incurvées individuelles (112) comportent au moins un canal transversal de réception de film (180) dans lequel les éléments de serrage transversaux de panneaux de film adjacents sont reçus.

4. Système selon la revendication 3, comprenant en outre une pièce d'angle (160) dans laquelle un bord d'un élément de serrage longitudinal et un bord d'un élément de serrage transversal d'un panneau de film individuel sont reçus, la pièce d'angle (160) étant attachée à une gouttière (140) et à l'un des éléments incurvés correspondants.

5. Système selon l'une quelconque des revendications 2 à 4, dans lequel le récepteur (120) est suspendu aux parties incurvées (112) ; et/ou
dans lequel le concentrateur solaire (115) est suspendu au récepteur (120) ; et/ou
dans lequel une partie incurvée individuelle est allongée dans une direction transversale, et a une longueur dans la direction transversale, et dans lequel le film (110) est fixé à la partie incurvée le long d'une majorité ou de la totalité de la longueur.

6. Système selon l'une quelconque revendication précédente, dans lequel le film (110) :
comporte une première zone ayant une première résistance de film et une seconde zone ayant une seconde résistance de film différente de la première résistance de film ; et/ou
comporte une première zone ayant une première résistance thermique et une seconde zone ayant une seconde résistance thermique différente de la première résistance thermique ; et/ou
comporte une fibre de renforcement (505), de préférence composée d'un matériau transparent ; ou ne comporte pas de fibre de renforcement (505) ; et/ou
comporte de multiples parties qui sont collées ensemble pour former la forme anticlastique, et dans lequel au moins deux des parties ont des tailles différentes ; ou
est préconditionné ; et/ou
est au moins partiellement fluoré ; et/ou
comporte de l'ETFE ; et/ou
est tendu entre de multiples parties incurvées (112) ; et/ou
a une épaisseur entre 50 et 250 µm.

7. Système selon l'une quelconque des revendications 1 à 5, dans lequel le film (110) comporte de multiples parties adjacentes qui sont mécaniquement reliées les unes aux autres par une accroche.

8. Système selon l'une quelconque des revendications 2 à 6, dans lequel le récepteur (120) s'étend le long d'un axe de récepteur (120), et dans lequel les parties adjacentes sont positionnées le long de l'axe de récepteur (120), et dans lequel des articulations entre les parties adjacentes s'étendent le long d'un axe d'articulation transversal à l'axe de récepteur (120) et/ou
dans lequel de multiples concentrateurs solaires (115) sont espacés selon un taux de remplissage dans une plage allant de 65 % à 75 % ; et/ou
dans lequel les concentrateurs solaires (115) sont des miroirs paraboliques.

9. Système selon la revendication 7, comprenant en outre :
un premier élément de serrage allongé attaché au bord d'une première partie adjacente ; et
un second élément de serrage allongé attaché au bord de la seconde partie adjacente, et dans lequel les premier et second éléments de serrage allongés sont reçus dans le canal de réception allongé (880) ; et/ou
dans lequel l'accroche est allongée et comporte un canal de réception allongé (880), et dans lequel des bords des parties adjacentes sont reçus dans le canal de réception allongé (880) ; ou dans lequel l'accroche comporte un renfort allongé incurvé positionné de façon adjacente au canal de réception allongé (880) de manière à rigidifier le canal de réception allongé (880).

10. Système selon la revendication 1, comprenant en outre une gouttière (140) s'étendant entre des parties incurvées (112), ou
comprenant en outre une gouttière (140) s'étendant entre des parties incurvées (112) et :
la gouttière (140) est attachée aux parties incurvées (112) et les supporte ; et/ou
la gouttière (140) est positionnée sous au moins une partie du concentrateur solaire (115), au moins une position du concentrateur solaire (115) ; et/ou
au moins une partie du concentrateur solaire (115) est positionnée au-dessus de la gouttière (140) lorsque le concentrateur solaire (115) est dans au moins l'une de multiples positions dirigées par un contrôleur ; et/ou
la gouttière (140) est attachée à la pluralité de parties incurvées (112) et a un canal de réception longitudinal (162) dans lequel les éléments de serrage longitudinaux des panneaux de film adjacents sont reçus.

11. Système selon l'une quelconque revendication précédente :
dans lequel une partie incurvée individuelle (112) comporte un canal de réception allongé (880), et dans lequel un bord du film (110) est reçu dans le canal de réception allongé (880) ; et/ou
dans lequel des parties incurvées voisines (112) sont espacées d'au moins 2,5 mètres ; et/ou
dans lequel la structure de support (111) comporte une pluralité de parties verticales (130), avec des parties verticales individuelles (130) supportant des parties incurvées individuelles (112) correspondantes, et dans laquelle un plan de référence est défini par des intersections entre des parties verticales (130) et des parties incurvées (112), et dans lequel le concentrateur solaire (115) est positionné de manière à couper le plan de référence, au moins une position du concentrateur solaire (115) ; et/ou
dans lequel au moins l'une des parties verticales (130) a une configuration de cadre en A.

12. Procédé d'assemblage d'une enceinte (135) pour la collecte d'énergie solaire, comprenant :
le fait d'ériger une structure de support (111) qui comporte une pluralité de parties incurvées (112) ;
la fixation d'un film souple (110) par rapport aux parties incurvées (112), le film (110) étant positionné de manière à transmettre le rayonnement solaire dans une zone intérieure de l'enceinte (135),
le film (110) formant une forme anticlastique entre des parties incurvées voisines (112), et
avant la fixation du film (110) aux parties incurvées (112) :
la mise en tension du film (110) de manière à produire un étirement dans le film (110) ;
le relâchement de la tension dans le film (110), au moins une partie de l'étirement étant préservé après le relâchement ; et/ou
après la fixation du film (110) aux parties incurvées (112) :
le traitement du film (110) de manière à augmenter la tension dans le film (110),
le positionnement d'un récepteur (120) dans la zone intérieure ; et
le positionnement d'un concentrateur solaire (115) dans la zone intérieure de manière à diriger le rayonnement solaire vers le récepteur (120) et chauffer un fluide de travail dans le récepteur (120).

13. Procédé selon la revendication 12, dans lequel le traitement du film (110) comporte le chauffage du film (110) ; et/ou
comprenant en outre le chauffage du film (110) après l'étirement du film (110) et avant le relâchement de la tension dans le film (110) de manière à préserver l'au moins une partie de l'étirement, de préférence en préservant en outre l'au moins une partie de l'étirement en contrôlant une température du film (110) de manière à ce qu'elle soit inférieure à une température seuil ; et/ou
dans lequel le film (110) a des premier et deuxième bords opposés, et des troisième et quatrième bords opposés, et dans lequel la mise en tension du film (110) comporte la mise en tension du film (110) dans une direction normale aux premier et deuxième bords, comprenant de préférence le fait de ne pas étirer le film (110) dans une direction normale aux troisième et quatrième bords ; et/ou la production d'un étirement de différentes quantités au niveau de différentes positions le long d'au moins l'un des premier ou deuxième bords.

14. Procédé selon l'une quelconque des revendications 12 à 13, dans lequel la fixation du film (110) comporte la fixation du film (110) tandis que le film (110) est détendu entre au moins deux parties incurvées (112), et dans lequel le procédé comprend en outre la remise en tension au moins partiellement du film (110) après la fixation du film (110) aux au moins deux parties incurvées (112), de préférence dans lequel la remise en tension au moins partiellement comporte le rétrécissement du film (110) dans une direction normale à au moins l'une des au moins deux parties incurvées (112).

15. Procédé selon l'une quelconque des revendications 12 à 14, dans lequel :
le film (110) forme une surface incurvée orientée vers le haut ; et/ou
dans lequel le film (110) forme une surface incurvée orientée vers l'extérieur ; et/ou
le fait d'ériger la structure de support (111) comporte :
le fait d'ériger un élément vertical ; et
le fait de supporter au moins l'une des parties incurvées (112) avec l'élément vertical en accouplant l'élément vertical à l'au moins une partie incurvée (112) ; et/ou
le fait d'ériger une première partie incurvée (112) au niveau d'une première position, la première partie incurvée (112) ayant une première rigidité ; et
le fait d'ériger une deuxième partie incurvée (112) au niveau d'une seconde position différente de la première position, la deuxième partie incurvée (112) ayant une deuxième rigidité différente de la première rigidité, comprenant en outre de préférence le fait d'alterner les première et deuxième parties incurvées (112) dans une direction alignée sur l'axe longitudinal du récepteur (120).
